# EUROPEAN PATENT SPECIFICATION

(11) **EP 3 831 046 B1**
(45) Date of publication and mention of the grant of the patent: **11.06.2025**
(21) Application number: 19765810.7
(22) Date of filing: 30.07.2019
(51) Int. Cl.: B22F 10/20, H04N 1/60, G06F 21/60, B33Y 50/00, B29C 64/386

(54) **SYSTEM, METHOD AND SHARING PLATFORM FOR CONDITIONED 3D PRINTING**
SYSTEM, VERFAHREN UND GEMEINSAME PLATTFORM FÜR BEDINGTES 3D-DRUCKEN
SYSTÈME, PROCÉDÉ ET PLATEFORME DE PARTAGE POUR IMPRESSION 3D CONDITIONNÉE

(30) Priority: 01.08.2018 IT 201800007728; 29.07.2019 IT 201900013245
(43) Date of publication of application: 09.06.2021
(73) Proprietor: EKUA 8 S.R.L., 20146 Malnate (Varese) (IT)
(72) Inventor: BOSCHETTI, Mattia, 21020 Brebbia (Varese) (IT); ESPOSITO, Claudio Enrico, 21020 Ranco (Varese) (IT)
(74) Representative: Penza, Giancarlo
(86) International application number: PCT/IB2019/056475
(87) International publication number: WO 2020/026131

(56) References cited:
- EP-A1- 3 132 919
- EP-A1- 3 156 926
- US-A1- 2017 126 674
- US-A1- 2017 218 660

## Description

### FIELD OF APPLICATION

The invention relates to the sector of 3D printing.

In particular, the invention relates to a system, method and sharing platform for conditioned 3D printing.

More in particular, the invention relates to conditioned 3D printing wherein a sharing platform creates an interface between designers of a 3D model to print and users of the 3D print, and the following description refers to this field of application for simplifying the disclosure.

### PRIOR ART

3D printing systems are known in which a printing interface unit allows a user to receive a model, made by a designer, to perform a 3D print; the user receives the model on their own processor, possibly customise it and can configure it for printing.

Unfortunately, such systems are inefficient by definition; once the designer has finalised the model, the possible user who wishes to create the model must access the interface unit, request the model, download the model on their PC, modify it for adapting it to their needs, evaluate the compatibility thereof with their own printer, configure it for printing and print the piece.

It is known that the efficiency of 3D printing is conditioned by compliance with physical, mechanical and chemical specifications for which it was designed.

A configuration of the printer by a user envisages all these variables being considered so as not to risk having a poor, or even unusable, product.

Only by guaranteeing compliance with the described variables is it possible to guarantee correct 3D printing and correct operation of the 3D printer.

Systems of the prior art do not envisage in any way any control on modifications performed by the final user on the starting model created by the designer; in other words, the final user can perform modifications, without the quality, compliance and safety of the modified model for printing being verified; this also determines an intrinsic difficulty in recognising the responsibility of any culpability or innocence of the person printing in the event of consequences on a printed piece based on a non-optimal model.

Finally, as such systems do not guarantee in any way any control on different versions of an original model, they do not safeguard in any way the intellectual property of the designer, nor do they protect the final user from any liability connected with the poor quality of the original model.

US 2017/126674 describes a method and apparatus for three-factor authentication in a cloud environment and a 3D printing method and apparatus that uses the method and apparatus for three-factor authentication in a cloud environment.

A disadvantage associated with US 2017/126674 is that the invention described allows instructions to be drawn up for printing based on parameters defined by any user requiring printing; for example, as shown in table 2 of the description, the parameters defined by the user are:
quality: a height of the layer (mm), a thickness (mm) of the surface layer and a retraction;
filling: a thickness (mm) of the upper / lower layer and filling density (%);
printing speed and temperature: a printing speed, a nozzle temperature and a printing plane temperature;
supports: none / partially / everywhere;
adhesion of the lower surface: strong / medium / weak; and
filament: diameter and injection flow.

This inevitably makes it impossible to guarantee the implementation quality of the piece printed starting from a design, in compliance with predefined design choices.

A general object of the present invention is to overcome the drawbacks of the known art.

The specific aim of the invention is to realise a simplified 3D print independently from the skills of the user requesting the print, regardless of the skills required in relation to the use of the printer and to the knowledge of the technical characteristics of the piece to be printed (e.g. materials, etc.).

Another aim is to realise an optimised 3D print in terms of the implementation efficiency of the printing operations envisaged in compliance with defined design specifications.

A further aim of the present invention is to realise a 3D print of guaranteed quality.

Another aim of the present invention is to realise an improved 3D print in terms of implementation times.

### SUMMARY OF THE INVENTION

These and other objects are achieved by the invention as defined by the appended claims.

In one aspect the invention describes a conditioned 3D printing system comprising:
a processing platform, used by a designer, arranged to make a design to be 3D printed;
a sharing platform, configured to share said design in a conditioned way,
a 3D printer configurable for printing said design;
a user processor of a user, in which said user processor is configured to communicate with said sharing platform and/or with said 3D printer;
wherein said processing platform comprises a first configuration module configured to define design choices that identify corresponding properties of said design necessary for 3D printing in compliance with said design;
wherein said sharing platform comprises:
   a processing unit, in turn comprising:
      - a first receiving module configured to receive said design to be 3D printed, made on the basis of design choices, which are defined by the designer, identifying corresponding properties of said design to be 3D printed;
      - a storage module configured to store the design to be 3D printed in a database platform;
   a user interface to a user, configured to:
      - make only consultation available via said user processor (50) of the design stored in said database platform;
   wherein said processing unit further comprises:
      - a second receiving module configured to receive from said user processor an authorisation request for 3D printing for said design as a function of authorisation parameters;
      - an authorisation module connected to the second receiving module, configured to process said authorisation request received from said receiving module and to generate an authorisation to print if said authorisation request parameters comply with predefined authorisation request parameters;
      - a third receiving module configured to receive a 3D printing instruction request, preferably from said 3D printer as a function of a said authorisation to print and of instruction request parameters;
      - a conformity control module, connected to the third receiving module, configured to control a conformity of said 3D printing instruction request received from said receiving module and to generate a confirmation for sending printing instructions if said printing instruction request parameters comply with predefined instruction request parameters;
      - a calculation module configured to generate said printing instructions as a function of said generated confirmation for sending printing instructions;
      - a transmission module configured to send said generated printing instructions to said 3D printer;
   wherein said 3D printer is arranged to
      - preferably send to said third receiving module said 3D printing instruction request as a function of said authorisation to print and of said instruction request parameters,
      - remotely carrying out an authorised 3D printing of said design stored in said database as a function of said printing instructions received from said transmission module;
   the conditioned 3D printing system makes said 3D print of said design by means of said 3D printer as a function of said design choices defined by said designer in said processing platform and as a function of said machine instructions sent from said sharing platform following evaluation of conformity of said authorisation request parameters and said printing instruction request parameters.

Preferably, said design choices defined by the designer are representative of physical-chemical characteristics and/or constraints in the printing process as a function of which the 3D printing with said 3D printer is to be made.

Preferably, said processing platform comprises a modelling module configured for:
- processing said design to be 3D printed;
- defining an area as a function of said design choices made, in which the area contains a univocal identification code, e.g. a serial number, of every 3D print that is subsequently to be made starting from said design.

Preferably, said conformity control module is configured to verify the 3D printing instruction request by carrying out the steps of:
- first extracting representative data of the printer model from the printing request;
- comparing the identified model with predefined models available in the database platform in order to evaluate a conformity;
- in a case of conformity, generating a first partial authorisation to generation of corresponding printing instructions.

Preferably, the conformity control module is further configured to verify the 3D printing instruction request by carrying out the steps of:
- secondly extracting representative data of the raw material and/or raw material batch, received authorisations, representative data of a geolocation of the 3D printer, from the printing request;
- comparing the extracted data with the corresponding data available in the database platform in order to evaluate a conformity;
- in a case of conformity of at least one of the extracted data, generating a second partial authorisation to generation of corresponding printing instructions.

Preferably, the step of extracting the raw material and/or raw material batch type is automatically actuated by sensors inside the printer.

Preferably, the conformity control module is configured to generate said confirmation for the sending of printing instructions if both the first partial authorisation and the second partial authorisation have been generated, in particular said second partial authorisation being generated in case of conformity of all the extracted data.

Preferably, said processing unit comprises an integration module configured to integrate said pre-selected module with one or more indicative parameters of serial numbers, any customisations and any variants linked to geolocation, in which said integration takes place prior to the generation of the printing instructions.

Preferably, said integration module is configured to communicate with said database platform, to verify the current status of serial numbers and to generate a new serial number assignable to the model to be printed.

Preferably, said serial number generated comprises a univocal identification code of a piece to be printed, in particular an alphanumeric code, a barcode, a QR code, an RFID code, etc., and is printed together with the piece to be printed, becoming a part thereof.

Preferably, said second calculation module is configured to aggregate a plurality of 3D prints of designs that are compatible, possibly integrated by said integration module, so that they can be made in the same printing operation.

Preferably, said 3D printer comprises a print processing unit provided with an execution module configured to make a print following said machine printing instructions received from said transmission module.

Preferably, said 3D printer is arranged to function on the basis of values of environmental and operating parameters.

Preferably, said operating parameters comprise one or more among:
- positioning of the printer;
- working temperatures of printer components;
- presence of power supply to the printer;
- another parameter;
   and
said environmental parameters comprise one or more among:
- ambient temperature;
- ambient moisture;
- geolocation;
- another parameter.

Preferably, said execution module is configured to constantly send to said processing unit, during the printing, current values of the environmental parameters and current values of the operating parameters.

Preferably, said processing unit comprises:
- a fourth receiving module configured to receive said current values of the environmental parameters and current values of the operating parameters;
- a printing control module configured to control the printing by constantly comparing the printing conformity of the current values of the environmental and operating parameters with corresponding predefined values of the environmental parameters and of the operating parameters comprised in the database platform.

Preferably, said printing control module is configured, in a case of nonconformity during the printing, to:
- send an error message to the 3D printer and
- record a nonconformity during the printing in the database platform, possibly maintaining a recording of the printing activity up to that moment and any pieces produced.

Preferably, said printing control module is further configured to generate a print certification message in a case of conformity maintained over a whole printing operation.

Preferably, said integration module is configured to:
- receive said print certification message;
- archive the values of the environmental parameters and all the data relative to the print carried out in the database platform.

Preferably, said processing platform further comprises:
- a transmission module configured to transmit to said sharing platform said design to be 3D printed as a function of said design choices which identify corresponding properties of said design.

In another aspect, the invention describes a computer implemented method, for conditioned 3D printing, comprising the steps of
- arranging a processing platform in order to make a design to be 3D printed, actuated by a designer;
- defining, through said processing platform design choices that identify corresponding properties of said design necessary for 3D printing in compliance with said design;
- arranging a sharing platform in which said method comprises steps, actuated by said sharing platform of:
- receiving said design to be 3D printed, made on the basis of said design choices defined by the designer which identify corresponding properties of said design to be 3D printed;
- storing in a database platform the design to be 3D printed;

wherein said method further comprises steps of
   - arranging a 3D printer configurable for printing said design;
   - arranging a user processor of a user, in which said user processor is configured to communicate with said sharing platform and/or with said 3D printer;
wherein said sharing platform is configured to further carry out steps of:
   - receiving from said user processor an authorisation request for 3D printing for said design as a function of authorisation parameters;
   - processing said received authorisation request for 3D printing and generating an authorisation to print if said authorisation request parameters comply with predefined authorisation request parameters;
   - receiving a 3D printing instruction request, preferably from said 3D printer as a function of said authorisation to print and of instruction request parameters;
   - controlling a conformity of said 3D printing instruction request received and generating a confirmation for sending printing instructions if said printing instruction request parameters comply with predefined instruction request parameters;
   - generating said printing instructions as a function of said generated confirmation to sending printing instructions;
   - preferably, sending said generated printing instructions to said 3D printer;
wherein said 3D printer is arranged to make the steps of:
   - sending said 3D printing instruction request as a function of said authorisation to print and of said instruction request parameters,
   - remotely carrying out an authorised 3D printing of said design stored in said database as a function of said printing instructions received from said transmission module;
the conditioned 3D printing method in this way makes said 3D print of said design by means of said 3D printer and as a function of said design choices defined by said designer in said processing platform and as a function of said machine instructions sent from said sharing platform following evaluation of conformity of said authorisation request parameters and said printing instruction request parameters.

In yet another aspect, the invention describes a sharing platform for conditioned 3D printing comprising a processing unit in turn comprising:
- a first receiving module configured to receive a design to be 3D printed, made on the basis of design choices, which are defined by the designer, identifying corresponding properties of said design to be 3D printed;
- a storage module configured to store the design to be 3D printed in a database platform;
- a user interface to a user, configured to make only one consultation available to said user via said user processor of the design stored in said database platform;
- a second receiving module configured to receive from said user processor an authorisation request for 3D printing for said design as a function of authorisation parameters;
- an authorisation module connected to the second receiving module, configured to process said authorisation request received from said receiving module and to generate an authorisation to print if said authorisation request parameters comply with predefined authorisation request parameters;
- a third receiving module configured to receive a 3D printing instruction request, preferably from a 3D printer as a function of a said authorisation to print and of instruction request parameters;
- a conformity control module, connected to the third receiving module, configured to control a conformity of said 3D printing instruction request received from said receiving module and to generate a confirmation for sending printing instructions if said printing instruction request parameters comply with predefined instruction request parameters;
- a calculation module configured to generate said printing instructions as a function of said generated confirmation for sending printing instructions;
- a transmission module configured to send said generated printing instructions to said 3D printer.

In a further aspect not explicitly claimed, the invention describes a computer program configured, when running, to implement one or more of the steps of the method of the second aspect or the functions of the sharing platform of the third aspect.

The solution proposed by the invention envisages a conditioned 3D print in which a processing platform, in use by a designer, is arranged for making a design to be 3D printed made based on design choices that identify corresponding properties thereof, and a sharing platform makes available in a single consultation to a user the design made and generates machine instructions for an identified printer necessary for remotely making the 3D print of the design created.

In particular, with respect to US 2017/126674 the main technical effect produced is the implementation quality guarantee of the printed piece in conformity with the design choices of the designer that cannot be modified in any step of the printing process by the user requesting the print.

The invention, as described, achieves the following technical effects:
- execution efficiency of the envisaged printing operations.
- guarantee of conformity to the physical, mechanical and chemical specifications for which the piece to be printed was designed.
- quality guarantee of the printed piece;
- reduced execution times;
- production control, in particular of the number of prints to make;
- efficient identification of the individual pieces printed;
- simplicity of optimisations on the initial design;
- guarantee of not altering the initial design unless allowed by the designer;
- security with respect to counterfeiting.

The technical effects/advantages mentioned, and other technical effects/advantages of the invention will emerge in further detail from the description provided herein below of an example of embodiment provided by way of approximate and non-limiting example with reference to the attached drawings.

### BRIEF DESCRIPTION OF THE DRAWINGS

Figure 1 schematically and generally represents the system of the invention, according to the invention.
Figure 2 schematically and individually represents a first component of the system of figure 1, in particular a processing platform.
Figure 3 schematically and individually represents a second component of the system of figure 1, in particular a sharing platform.

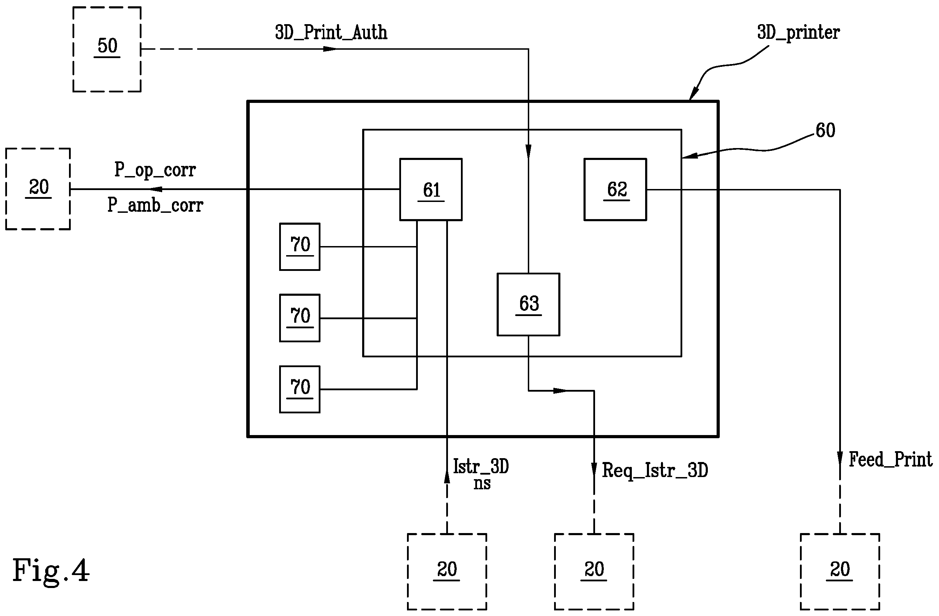

Figure 4 schematically and individually represents a third component of the system of figure 1, in particular a 3D printer.

### DETAILED DESCRIPTION

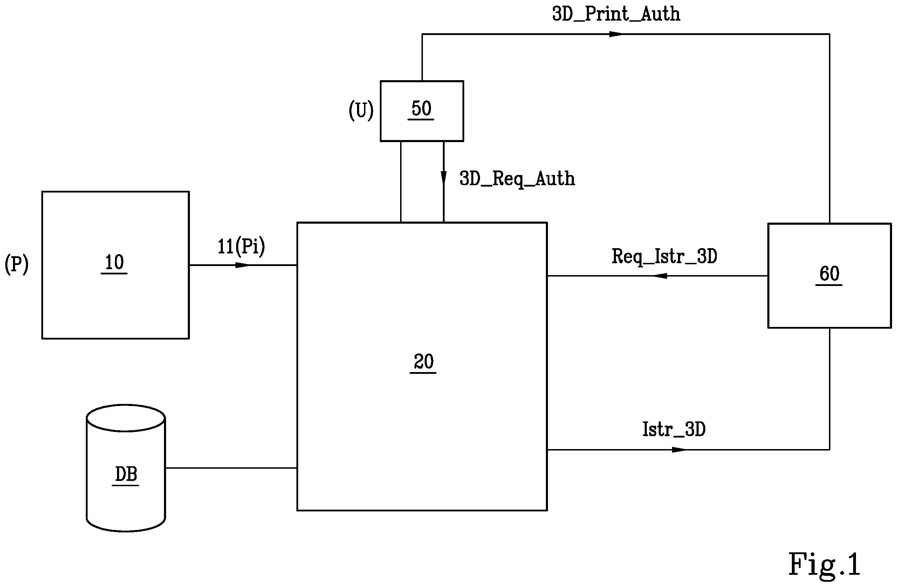

With reference to Figure 1, the invention describes in a first aspect thereof, a conditioned 3D printing system comprising a processing platform 10, used by a designer P and arranged for making a design 11 to be 3D printed, a sharing platform 20 configured for sharing the design 11 in a conditioned way, a 3D printer 3D_printer configurable for printing the design 11 and a user processor 50, of a user U, configured to communicate with the sharing platform 20 and/or with the 3D printer 3D_printer.

Preferably, the sharing platform 20 is a web platform for efficient and secure 3D printing.

Preferably, the sharing platform 20 is supported by appropriate centralised or distributed hardware; the platform is also provided with a processing unit, as described below.

According to the invention, the platform interacts with designers, people printing, users and printers.

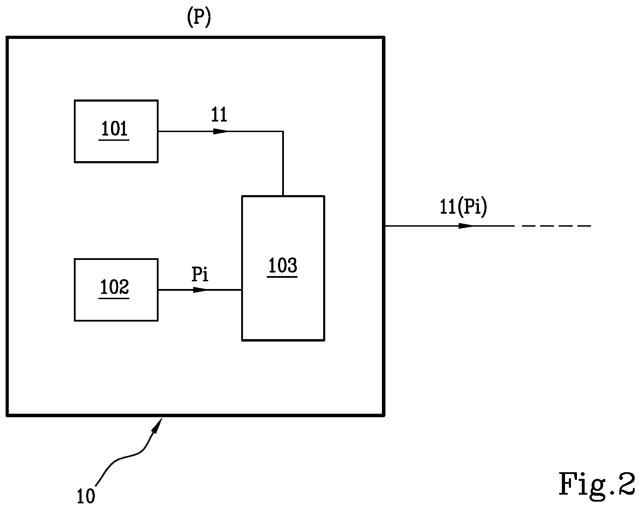

With reference to figures 1 and 2, the invention envisages a designer P working on the processing platform 10 to make the design 11 to be 3D printed.

The processing platform 10 comprises the assembly of hardware and software instruments that allow the designer P to make the design 11.

The design is made through modelling and is made on the basis of design choices Pi that identify corresponding properties thereof.

Once the design 11 is made on the basis of the aforesaid design choices Pi, it is transmitted to the sharing platform 20.

According to the invention, the sharing platform 20 is distinct not only in terms of functionality, but also possibly physically from the processing platform 10, the latter being intended for making the design 11 by the designer P and the sharing platform 20 intended for a conditioned sharing functionality of 3D prints made on the basis of different designs 11, coming from different processing units 10, preferably associated with different designers P.

During the description, the processing units/platforms shall be logically divided into distinct functional modules (storage modules or operating modules) that perform the described functions.

Such processing units/platforms can comprise a single electronic device, appropriately programmed to perform the functionalities described, and the different modules can correspond to hardware entities and/or routine software that are part of the programmed device.

Alternatively or additionally, these functions can be performed by a plurality of electronic devices on which the aforesaid functional modules can be distributed.

The processing units/platforms can make use of one or more processors for executing the instructions contained in the storage modules.

Said functional modules can also be distributed over different local or remote calculators, depending on the architecture of the network in which they reside.

With reference to figure 2, the processing platform 10 provided for making the design 11 to be 3D printed comprises a modelling module 101 configured to process the design 11 to be 3D printed.

In other words, the modelling module 101 allows the digital model of the design 11 to be printed to be defined.

The processing platform 10 further comprises a first configuration module 102 configured to define design choices Pi that identify corresponding properties of the design necessary for 3D printing in compliance with the design 11.

The modelling module 101 is further configured to define an area as a function of the design choices Pi made, wherein the area contains a univocal identification code, e.g. a serial number, of every 3D print that is subsequently to be made starting from the design 11.

In other words, each 3D piece to be made with the system of the invention, starting from the design 11, shall have an identification code, e.g. a univocal serial number established on the basis of the design choices Pi made.

The design choices Pi are representative at least of physical-chemical characteristics of the surfaces to be printed and/or constraints in the printing process as a function of which the 3D printing with the 3D printer 3D_printer is to be made.

Preferably, the design choices Pi representative of physical-chemical properties of the surfaces to be printed comprise: colour, opacity/transparency, roughness, elasticity, conductivity, type of raw material, allowed tolerances, area by serial number, areas or properties that can be customisable by the user, variants by geographical areas or the like.

Preferably the design choices Pi representative of constraints in the printing process comprise print position constraints in relation to the piece(s) to be printed, such as the absolute position, rotation, or the like, and the cooling time, types of printers and/or print technologies.

Preferably, the designer decides to make some properties customisable such as, but not only, some aesthetic properties such as colour, a zone of the printed object for a dedicated message, etc.

The term "customisable" means that the final user can choose some of the minor configuration properties allowed by the designer as they do not affect the quality/conformity/mechanical properties of the final piece produced.

The technical effect is to guarantee the quality and conformity of the piece, having total certainty that it was produced exclusively using the design choices defined by the designer him/herself.

A further technical effect is that of preventing any counterfeit of the piece produced deriving directly from the design choices made by the designer that may not be visible from the outside of the printed piece and, therefore, not possible to copy.

To do this, as will be seen during the description, the system proposed in this invention will provide the "machine instructions" directly to the 3D printer for each 3D print to perform. These will at the same time contain the correct design choices Pi, established by the designer.

The designers P will be the only ones to have the possibility to define the design choices Pi. The above is a central aspect in order to guarantee the implementation quality of the final product.

In the step of processing the design 11, once a fully satisfactory result has been obtained, the designers will send the design to the sharing platform, which will file it; as will be described in detail later, after saving, and only following a printing instruction request, the platform will automatically process the machine instructions as a function of the characteristics of the printer that requests them, following identification thereof by the platform itself, and will send the printing instructions.

The processing platform 10 comprises a transmission module 103 configured to transmit to the sharing platform 20 the design 11 to be 3D printed made on the basis of design choices Pi defined by the designer.

The sharing platform 20 is configured to share the design 11 in a conditioned way.

In other words, the sharing platform 20 is configured to share the design(s) 11 with a user U, but only upon the verification of certain conditions described below.

During the description, user U shall mean the individual user who requests a print or an automatic system for managing production that requests a print.

The sharing platform 20 envisages the steps of receiving the design 11 to be 3D printed, made on the basis of design choices Pi defined by the designer P which identify corresponding properties of the design 11 to be 3D printed.

The sharing platform 20 further envisages storing in a database platform DB the design 11 to be 3D printed.

Logically, and possibly also physically, the database platform DB comprises at least four separate but interacting databases:
DB1: database of the designs 11 made by the designers;
DB2: database of the authorisations 3D_print_auth for subsequent printing, described below;
DB3: database of 3D printers 3D_printer that can be used for 3D printing and operating parameters;
DB4: database of the log of prints performed.

In particular, the database DB1 allows the archiving and management of all the designs 11 to be printed and a multitude of properties of the design 11.

In general, the database platform DB, as well as the design 11 specifications, allows printing statistics to be obtained in relation to an individual designer, an individual design, an individual printer, an individual user U, as described below.

The designer can also provide a time limited guarantee for the product. Any pieces returned can be analysed better thanks to the information associated therewith provided by the platform, in particular in the database DB4.

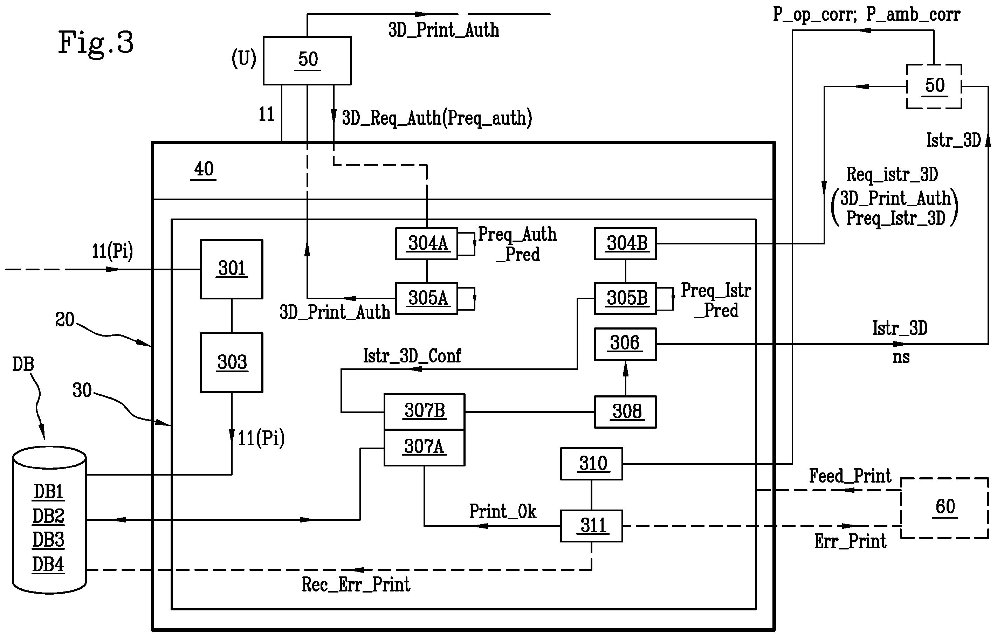

With reference to figure 3, in particular, the sharing platform 20 comprises a processing unit 30 in turn comprising a first receiving module 301 configured to receive the design 11 to be 3D printed made on the basis of the aforesaid design choices Pi defined by the designer P. The processing unit 30 further comprises a storage module 303 configured to store in the database platform DB, in particular in the database DB1 of the designs 11, the design 11 to be 3D printed that contains the design choices Pi.

The storage module 303 is further configured to store a plurality of designs 11 made by the designers P.

With reference to figures 1 and 3, a user U can ask to consult the design 11 or designs 11 stored in the database DB1 of designs 11 in the parts that the designer has decided to make accessible for consultation.

A user processor 50 is associated with the user U and is configured to communicate with the sharing platform 20 and/or with the 3D printer 3D_printer.

In other words, the user processor 50 governs the relations between the user U and the sharing platform 20 and/or the 3D printer 3D_printer.

In one embodiment, the sharing platform 20 envisages providing a user interface 40 to the user U to make the design 11 or designs 11 stored in the database DB available in a single consultation.

Preferably, the user U is associated with the user processor 50 configured to access the user interface 40.

The user processor 50 is further configured to consult, in a single reading, through the interface 40, the design 11 among a plurality of available designs 11 and to request a 3D printing authorisation of a design 11 of interest.

In other words, the user U must access the sharing platform 20 to request an authorisation for the 3D printing of one or more pieces.

For the authorisation request, as shown in figures 1 and 3, it is envisaged that the sharing platform 20 receives from the user processor 50, a request for authorisation to 3D print Req_Auth for the design 11 as a function of authorisation parameters Preq_auth.

The processing unit 30 comprises a second receiving module 304A configured for that purpose.

Preferably, the authorisation parameters Preq_auth comprise one or more of at least:
- an identification code of the design 11 requested for 3D printing;
- a number of pieces to be printed n_3D_auth;
- any customisations Pers_11 allowed in the design 11.

The invention envisages the processing of the received authorisation request for 3D printing Req_Auth and the generation of an authorisation to print 3D_print_auth if the authorisation request parameters Preq_auth comply with predefined authorisation request parameters Preq_auth_PRED (fig. 3).

The processing unit 30 comprises an authorisation module 305A, connected to the second receiving module 304A, and configured to process the request Req_Auth received from the receiving module 304A and to generate the authorisation to print 3D_print_auth, in the event of conformity.

In other words, the authorisation module 305A is configured to decide, on the basis of authorisation request parameters Preq_auth whether to send an authorisation to the user U for printing or to deny it.

In one embodiment, the sharing platform 20 can be directly connected to the 3D printer 3D_printer through a known communication system, as shown in figures 1 and 3.

It is envisaged by the invention that, only after a print of a design has been authorised, a printer or a general user processor can connect to the sharing platform and request instructions for printing conditioned by receipt of authorisation and conformity with other operating parameters.

Therefore, it is envisaged that the sharing platform 20 receives a 3D printing instruction request Req_istr_3D, preferably from the 3D printer 3D_printer, as a function at least of the authorisation to print 3D_print_auth.

Preferably, such authorisation to print 3D_print_auth was previously sent to the user processor 50 with which the 3D printer 3D_printer is possibly associated.

According to the invention, it is further envisaged that the printing instruction request 3D Req_istr_3D, preferably received by the 3D printer 3D_printer, is also as a function of specific instruction request parameters Preq_istr_3D.

Preferably, the instruction request parameters Preq_istr_3D comprise one or more of at least:
- an authorisation 3D_print_auth;
- a desired number of pieces n_3D;
- the 3D printer model;
- a geolocation of the 3D printer;
- the type of raw material for printing;
- the batch of raw material for printing.

The processing unit 30 comprises a third receiving module 304B configured to receive, preferably from the 3D printer 3D_printer, the 3D printing instruction request Req_istr_3D as a function of the authorisation to print 3D_print_auth and for instruction request parameters Preq_istr_3D.

In other words, preferably, the 3D printer 3D_printer comprises a request module 63 configured to send to the third receiving module 304B the 3D printing instruction request Req_istr_3D as a function of the instruction request parameters Preq_istr_3D and a received authorisation to print 3D_print_auth.

The invention envisages that there be a conformity check of the 3D printing instruction request Req_istr_3D received and a generation of confirmation istr_3D_conf for sending printing instructions if the printing instruction request parameters Preq_istr_3D comply with predefined instruction request parameters Preq_auth_PRED.

The processing unit 30 comprises a conformity control module 305B connected to the third receiving module 304B, and configured for such functions of conditioned verification and generation of confirmation.

In other words, the conformity control module 305B is configured to decide, based on instruction request parameters Preq_istr_3D and predefined allowable values Preq_istr_PRED of said parameters, whether the printing instructions istr_3D can be generated or not.

The conformity evaluation operation, according to the invention, is completely automatic, guaranteeing the reliability of the result which cannot be influenced by any human error. According to the invention, the conformity control module 305B is configured to verify the 3D printing instruction request Req_istr_3D, in particular by carrying out the steps of:
- first extracting Ex_1 representative data of the printer model 3D_printer from the printing request Req_istr_3D;
- comparing the identified model with predefined models 3D_print_pred available in the database DB3 in order to evaluate a conformity;
- in a case of conformity, generating a first partial authorisation (Auth 1) to generation of corresponding printing instructions istr_3D.

In this step, the conformity control module 305B is also configured to establish how many of the desired pieces n_3D can be produced simultaneously in a single print as a function of the printer characteristics, using an aggregation function as described below.

In particular, the conformity control module 305B is configured to send to the printer 3D print_3D the number n_disp of printable pieces possibly lower than the number of desired pieces n_3D.

The 3D printer print_3D will decide whether to proceed to print or not. The user that uses the printer will decide whether to change printer if the number of printable pieces n_disp is lower than the desired number of pieces n_3D.

If the 3D printer 3D_printer decides to proceed to print, the effective number of prints will be the number of prints n_disp. Preferably, at the time of the request for the number of desired pieces n_3D, such number of pieces will be temporarily "booked" in the database of authorisations DB2, until the effective print outcome.

In other words, for the effective period of time in which the desired number of pieces n_3D remains "booked", no printer can request a further print of such pieces.

The conformity control module 305B is further configured to verify the 3D printing instruction request Req_istr_3D in particular by carrying out the steps of:
- secondly extracting Ex_2 representative data of the raw material and/or raw material batch, 3D_print_auth received authorisations, representative data of a geolocation of the 3D printer, from the printing request Req_istr_3D;
- comparing the extracted data with the corresponding data available in the database platform DB in order to evaluate a conformity;
- in a case of conformity of at least one of the extracted data, generating a second partial authorisation Auth 2 to generation of corresponding printing instructions istr_3D.

In particular, the step of extracting the raw material and/or raw material batch type is automatically actuated by sensors inside the printer.

The invention envisages generating confirmation for sending printing instructions Istr_3D_conf if conformity has been detected in each of the previous primary Ex_1 and secondary Ex_2 extraction steps.

In other words, the conformity control module 305B is configured to generate the confirmation for sending printing instructions istr_3D_conf if both the first partial authorisation Auth_1 and the second partial authorisation Auth_2 have been generated.

In a preferred embodiment, the second partial authorisation Auth_2 is generated in the event of conformity of all the extracted data, i.e. in contemporary conformity of the data representative of the type of raw material and/or the raw material batch, received authorisations 3D_print_auth and representative data of a geolocation of the 3D printer. In particular the processing unit 30 comprises a calculation module 307B configured to generate the printing instructions istr_3D as a function of the generated confirmation istr_3D_conf, as also described in detail below.

Prior to the generation of the printing instructions istr_3D, the invention envisages that, in the event of conformity, the pre-selected design 11 is integrated with one or more of the indicative parameters of serial number, any customisations and any variants connected with geolocation.

In particular, the processing unit 30 comprises an integration module 307A configured for that purpose.

In particular, the invention envisages that, for every requested print and for which the request is considered compliant, if possibly envisaged by the designer, a serial number ns is generated to univocally identify a piece for printing.

For this purpose, the first integration module 307A is configured to communicate with the database platform DB, in particular with the database DB4 of the print log, to verify the current status of serial numbers ns and to generate a new serial number assignable to the design 11 to be printed.

The serial number ns generated is in general a univocal identification code of a piece to be printed.

In particular, it may be alphanumeric code, a barcode, a QR code, an RFID code, etc.

The serial number is printed together with the piece to be printed, becoming a part thereof.

In other words, the serial number is integrated into the piece itself during the machine instruction processing step istr_3D.

The integration module 307A is further configured to access the database platform DB, in particular the database DB1 of designs, and on the basis of the geographical area from where the instruction request comes, insert into the printing instructions corresponding adaptations established by the designer and possibly as a function of reference legislation.

It is also envisaged that the integration module 307A integrates into the design 11 also any customisations Pers_11 that the user is allowed to make to the design 11 and possibly present in the printing request.

The invention envisages that a plurality of pieces, corresponding to different designs 11, can be printed in the same printing operation.

For this purpose, the second calculation module 307B aggregates the different designs 11, i.e. it generates a complex model composed of different compatible designs 11 integrated through the integration model 307A.

In particular, for example, the aggregation of the prints can take place as a function of their printing "dimensions" in the 3D printer, the compatibility of the type of material used for printing or other conditions finalised for the optimisation of the printing process.

In other words, the second calculation module 307B is configured to aggregate a plurality of 3D prints of compatible designs 11 for which it has received the printing requests Req_istr_3D and corresponding authorisations to print 3D_printer_auth + any customisations so that they can be performed in the same printing operation.

The second calculation module 307B is further configured to generate the machine instructions Istr_3D as a function of the aggregation performed.

The transmission module 306 will send the instructions istr_3D to the 3D printer 3D printer. The encryption of the generated machine instructions Istr_3D prior to the sending to the printer 3D_printer is further envisaged.

In more detail, with reference to figure 3, the processing unit 30 comprises an encryption module 308 configured to perform such function.

The invention envisages sending the generated printing instructions Istr_3D to the 3D printer 3D_printer.

For this function, the processing unit 30 comprises a transmission module 306 especially configured to send to the 3D printer 3D_printer the generated printing instructions Istr_3D.

According to the invention, the 3D printer 3D_printer is configured to remotely perform an authorised 3D print of the design 11, stored in the database platform DB, in particular in the database DB1 of designs 11, as a function of the printing instructions Istr_3D received from the transmission module 306.

The printing instructions Istr_3D are necessary for remotely performing on the 3D printer 3D_printer the 3D print of the design 11, thus preventing the design 11 being downloaded on the 3D printer itself.

The 3D conditioned print of the invention performs, in this way, the 3D print of the design 11 by means of the 3D printer 3D_printer and as a function of the design choices Pi defined by the designer P in the processing platform 10, and as a function of the machine instructions Istr_3D sent from the sharing platform 20 to the printer, following evaluation of conformity of the authorisation request parameters Preq_auth and the printing instruction request parameters Preq_istr_3D.

The technical effects achieved are a guarantee of conformity to the physical, mechanical and chemical specifications for which the model to be printed was designed, and a guarantee of non-alteration of the initial design.

Preferably a buffer is provided on board the 3D printer 3D_printer in which the machine instructions Istr_3D received from the sharing platform 20 are temporarily stored through a secure protocol.

Preferably, the machine instructions istr_3D can also be provided in a proprietary language to further increase the security of the printing process.

According to the invention, it is envisaged that the 3D printer 3D_printer prints the design 11 performing the machine instructions Istr_3D received from the sharing platform 20.

In particular, with reference to figure 3, the 3D printer 3D_printer comprises a print processing unit 60 provided with an execution module 61 configured to make the print, following possible decryption, performing the machine instructions istr_3D received from the sharing platform 20, in particular from the transmission module 306.

In general, the 3D printer 3D printer is arranged to function on the basis of values of environmental and operating parameters P_amb and P_op.

Preferably, the operating parameters P_op comprise one or more among:
- positioning of the printer (e.g. if it is correctly level or not);
- working temperatures of printer components;
- presence of power supply to the printer;
- another parameter.

Preferably, the environmental parameters P_amb comprise one or more among:
- ambient temperature;
- ambient moisture;
- geolocation;
- another parameter.

In particular, the 3D printer 3D printer is arranged to operate on the basis of predefined values of environmental parameters P_amb_PRED and predefined values of operating parameters P_op_PRED as a function of the 3D printer model.

The values of such predefined environmental parameters P_amb_PRED and operating parameters P_op_PRED, with reference to each 3D printer 3D_printer model authorised to print, are contained in the database platform DB, in particular in the database DB3 of printers. The 3D printer 3D_printer comprises detection means 70 arranged for the automatic detection of current values of environmental parameters P_amb_corr and operating parameters P_op_corr and to send them to the sharing platform 20 through the execution module 61. In particular, the printer comprises internal sensors arranged for the detection of the aforesaid parameters.

In other words, during printing, the execution module 61 constantly sends current values of environmental parameters P_amb_corr and operating parameters P_op_corr.

The invention envisages a continuous control by the sharing platform 20 on values of such parameters so as to guarantee the security of the printing operation and the quality of the print produced.

The processing unit 30 of the sharing platform 20 comprises a fourth receiving module 310 configured to receive such current values of environmental parameters P_amb and operating parameters P_op.

The processing unit 30 further comprises a printing control module 311 configured to control the printing by constantly comparing the printing conformity of the current values of the environmental P_amb_corr and operating P_op_corr parameters with corresponding predefined values of the environmental parameters P_amb_PRED and of the operating parameters P_op_PRED contained in the database DB3 of printers.

In the event of printing non-conformity in printing, the printing control module 311 is configured to send an error message Err_print to the 3D printer 3D_printer and to register the printing non-conformity Rec_Err_print in the database platform, in particular in the database DB4 of the print log, possibly maintaining a record of the printing activity performed until that time and of any pieces produced.

The technical effect is to prevent prints already made being produced a second time.

The printing non-conformity is due to operating causes that cannot be controlled during the pre-print conformity check performed by the conformity control module 305B.

The printing non-conformity can be due to many causes including the interruption of the printer power supply, printing material running out, etc.

The printing control module 311 is further configured to generate a print certification message PRINT OK in a case of conformity maintained over a whole printing operation.

The integration module 307A is configured to receive the print certification message PRINT_OK.

The integration module 307A is further configured to archive the values of the environmental parameters and of all the data related to the print performed (design 11 identification code, serial number if provided, printer identification, print date and time, raw material batch, references to authorisations granted for printing etc.) in the database platform DB, in particular in the database DB4 of the log of prints carried out.

If there has been no interruption to printing, the printing control module 311 has generated a print certification message PRINT_OK.

In the event of interruption to printing, detected by the printing control module 311, the number of pieces effectively produced is indicated by the printing control module 311 in the record Rec_Err_print.

Both in the event in which there has been an interruption and in the event in which there has been no interruption to printing, the number of pieces effectively produced is decreased by the value of the authorisations available in the database platform DB in particular in the database of authorisations DB2.

Once the value of available authorisations has been decreased the system unlocks the bookings for subsequent printing operations.

Preferably, it is also envisaged that the 3D printer 3D_printer returns to the sharing platform 20 a feedback feed_print representative of a term of the printing operation.

In particular, the print processing unit 60 is provided with a feedback module 62 configured to return feedback information feed_print on the print performed to the sharing platform.

The invention, because of its structural and intrinsic characteristics, envisages in a further aspect thereof also a sharing platform, for conditioned printing, that can be carried out individually and implemented on one or more calculators, and adapted to communicate on one hand with a processing platform and on the other with a 3D printer.

The sharing platform 20, for conditioned 3D printing, comprises a processing unit 30 in turn comprising:
- a first receiving module 301 configured to receive a design 11 to be 3D printed, made on the basis of design choices Pi, which are defined by the designer P, identifying corresponding properties of the design 11 to be 3D printed;
- a storage module 303 configured to store the design 11 to be 3D printed in a database platform DB;
- a user interface 40 to a user U, configured to make only one consultation available to the user U via the user processor 50 of the design 11 stored in the database platform DB;
- a second receiving module 304A configured to receive from the user processor 50 an authorisation request for 3D printing Req_Auth for the design 11 as a function of authorisation parameters Preq_auth;
- an authorisation module 305A connected to the second receiving module 304, configured to process the authorisation request Req_Auth received from the receiving module 304 and to generate an authorisation to print 3D_print_auth if the authorisation request parameters (Preq_auth) comply with predefined authorisation request parameters Preq_auth_PRED;
- a third receiving module 304B configured to receive a 3D printing instruction request Req_istr_3D, preferably from a 3D printer 3D_printer as a function of the authorisation to print 3D_print_auth and of instruction request parameters Preq_istr_3D;
- a conformity control module 305B, connected to the third receiving module 304B, configured to control a conformity of the 3D printing instruction request Req_istr_3D received from the receiving module 304B and to generate a confirmation for sending printing instructions istr_3D_conf if the printing instruction request parameters Preq_istr_3D comply with predefined instruction request parameters Preq_auth_PRED;
- a calculation module 307B configured to generate the printing instructions stampa_istr_3D as a function of a generated confirmation for sending printing instructions istr_3D_conf;
- a transmission module 306 configured to send the generated printing instructions Istr_3D to the 3D printer 3D_printer.

Preferably, the conformity control module 305B is configured to verify the 3D printing instruction request Req_istr_3D by carrying out the steps of:
- first extracting Ex_1 representative data of the printer model 3D_printer from the printing request Req_istr_3D;
- comparing the identified model with predefined models 3D_print_pred available in the database platform DB in order to evaluate a conformity;
- in a case of conformity, generating a first partial authorisation Auth 1 to generation of corresponding printing instructions istr_3D.

Preferably, the conformity control module 305B is further configured to verify the 3D printing instruction request Req_istr_3D by carrying out the steps of:
- secondly extracting Ex_2 representative data of the raw material and/or raw material batch, 3D_print_auth received authorisations, representative data of a geolocation of the 3D printer, from the printing request Req_istr_3D;
- comparing the extracted data with the corresponding data available in the database platform DB in order to evaluate a conformity;
- in the event of conformity of at least one of the data extracted, generating a second partial authorisation Auth_2 for the generation of corresponding printing instructions istr_3D. The conformity control module 305B is configured to generate the confirmation for the sending of printing instructions istr_3D_conf if both the first partial authorisation Auth_1 and the second partial authorisation Auth_2 have been generated, in particular the second partial authorisation Auth_2 being generated in the event of conformity of all the extracted data.

In particular, the step of extracting the raw material and/or raw material batch type is automatically actuated by sensors inside the printer.

In general, the sharing platform 20 comprises the characteristics and functionalities previously disclosed in the description of the sharing platform comprised in the conditioned 3D printing system.

In a further aspect not claimed, the invention envisages a computer program configured, when running, to implement one or more of the operating steps described in relation to the 3D printing system/method.

In another aspect not claimed, the invention envisages a computer program configured, when running, to implement the functions of the sharing platform independently considered.

## Claims

1. A sharing platform (20), for conditioned 3D printing, comprising:
- a processing unit (30), in turn comprising:
- a first receiving module (301) configured to receive a design (11) to be 3D printed, made on the basis of design choices (Pi) defined by the designer (P) which identify corresponding properties of said design (11) to be 3D printed;
- a storage module (303) configured to store the design (11) to be 3D printed in a database platform (DB);
- a user interface (40) to a user (U), configured to make only consultation of the design (11) stored in said database platform (DB) available to said user (U) via a user processor (50);
- a second receiving module (304A) configured to receive from said user processor (50) an authorisation request for a 3D printing (Req_Auth) for said design (11) based on authorisation parameters (Preq_auth), said authorisation parameters (Preq_auth) comprising one or more of at least:
- an identification code of the design (11) requested for 3D printing;
- a number of pieces to be printed (n_3D_auth);
- any customisations (Pers_11) allowed in the design (11);
- an authorisation module (305A) connected to the second receiving module (304), configured to:
- process said authorisation request (Req_Auth) received from said receiving module (304);
- generate an authorisation to print (3D_print_auth) if said authorisation request parameters (Preq_auth) comply with predefined authorisation request parameters (Preq_auth_PRED);
- send an authorisation to the user (U) for printing;
- a third receiving module (304B) configured to receive a 3D printing instruction request (Req_istr_3D) based on said authorisation to print (3D_print_auth) and of instruction request parameters (Preq_istr_3D);
- a conformity control module (305B), connected to the third receiving module (304B), configured to control a conformity of said 3D printing instruction request (Req_istr_3D) received from said receiving module (304B) and to generate a confirmation for sending printing instructions (istr_3D_conf) if said printing instruction request parameters (Preq_istr_3D) comply with predefined instruction request parameters (Preq_auth_PRED);
- a calculation module (307B) configured to generate said printing instructions (istr_3D) as a function of said generated confirmation for sending printing instructions (istr_3D_conf);
- a transmission module (306) configured to send said generated printing instructions (Istr_3D) to a 3D printer (3D_printer);
- an integration module (307A) configured to integrate said design (11) with one or more indicative parameters of serial numbers, any customisations and any variants linked to geolocation, wherein said integration takes place prior to the generation of the printing instructions (istr_3D);
wherein said integration module (307A) is configured to communicate with said database platform (DB), in order to verify the current status of the serial numbers (ns) and to generate a new serial number assignable to the design (11) to be printed;
wherein said serial number (ns) generated comprises a univocal identification code of a piece to be printed and is printed together with the piece to be printed, becoming a part thereof.

2. A conditioned 3D printing system (1) comprising:
- a processing platform (10), used by a designer (P), arranged to make a design (11) to be 3D printed;
- a sharing platform (20), configured to share said design (11) in a conditioned way,
- a 3D printer (3D_printer) configurable for printing said design (11);
- a user processor (50) of a user (U), in which said user processor (50) is configured to communicate with said sharing platform (20) and/or with said 3D printer (3D_printer);
wherein said processing platform (10) comprises:
- a first configuration module (102) configured to define design choices (Pi) that identify corresponding properties of said design (11) necessary for 3D printing in compliance with said design (11);
- a modelling unit (101) configured to:
- process said design (11) to be printed in 3D;
- define an area as a function of said design choice (Pi) made, wherein the area contains a univocal means of identity of each 3D print that will be subsequently implemented starting from said design (11);
wherein said sharing platform (20) comprises:
- a processing unit (30), in turn comprising:
- a first receiving module (301) configured to receive said design (11) to be 3D printed, made on the basis of design choices (Pi), which are defined by the designer (P), identifying corresponding properties of said design (11) to be 3D printed;
- a storage module (303) configured to store the design (11) to be 3D printed in a database platform (DB);
- a user interface (40) to a user (U), configured to make only consultation of the design (11) stored in said database platform (DB) available via said user processor (50);
- a second receiving module (304A) configured to receive from said user processor (50) an authorisation request for a 3D printing (Req_Auth) for said design (11) based on authorisation parameters (Preq_auth) comprising one or more of at least:
- an identification code of the design (11) requested for 3D printing;
- a number of pieces to be printed (n_3D_auth);
- any customisations (Pers_11) allowed in the design (11);
- an authorisation module (305A) connected to the second receiving module (304), configured to:
- process said request (Req_Auth) received from said receiving module (304);
- generate an authorisation to print (3D_print_auth) if said authorisation request parameters (Preq_auth) comply with predefined authorisation request parameters (Preq_auth_PRED);
- send an authorisation to the user (U) for printing;
- a third receiving module (304B) configured to receive a 3D printing instruction request (Req_istr_3D) based on said authorisation to print (3D_print_auth) and of instruction request parameters (Preq_istr_3D);
- a conformity control module (305B), connected to the third receiving module (304B), configured to control a conformity of said 3D printing instruction request (Req_istr_3D) received from said third receiving module (304B) and to generate a confirmation for sending printing instructions (istr_3D_conf) if said printing instruction request parameters (Preq_istr_3D) comply with predefined instruction request parameters (Preq_auth_PRED);
- a calculation module (307B) configured to generate said printing instructions (istr_3D) as a function of said generated confirmation for sending printing instructions (istr_3D_conf);
- a transmission module (306) configured to send said generated printing instructions (Istr_3D) to said 3D printer (3D_printer);
- an integration module (307A) configured to integrate said design (11) with one or more indicative parameters of serial numbers, any customisations and any variants linked to geolocation, wherein said integration takes place prior to the generation of the printing instructions (istr_3D);
wherein said integration module (307A) is configured to communicate with said database platform (DB), in order to verify the current status of the serial numbers (ns) and to generate a new serial number assignable to the design (11) to be printed;
wherein said serial number (ns) generated comprises a univocal identification code of a piece to be printed, and is printed together with the piece to be printed, becoming a part thereof.
wherein said 3D printer (3D_printer) is arranged to remotely carry out an authorised 3D printing of said design (11) stored in said database (DB) as a function of said printing instructions (Istr_3D) received from said transmission module (306);
the conditioned 3D printing (1) system making said 3D printing of said design (11) by means of said 3D printer (3D_printer) as a function of said design choices (Pi) defined by said designer (P) in said processing platform (10), and as a function of said machine instructions (Istr_3D) sent by said sharing platform (20) following evaluation of conformity of said authorisation request parameters (Preq_auth) and said printing instruction request parameters (Preq_istr_3D).

3. The system according to claim 2, wherein said 3D printer (3D_printer) is further arranged to send to send third receiving module (304B) said 3D printing instruction request (Req_istr_3D) based on said authorisation to print (3D_print_auth) and of said instruction request parameters (Preq_istr_3D),

4. The system according to claim 2 or 3 wherein said design choices (Pi) defined by the designer (P) are representative of physical-chemical characteristics and/or constraints in the printing process as a function of which the 3D printing with said 3D printer (3D_printer) is to be made.

5. The system according to any of the preceding claims, wherein the univocal means of identity comprise a serial number.

6. The system according to any one of the preceding claims 2 to 5, wherein said conformity control module (305B) is configured to verify the 3D printing instruction request (Req_istr_3D) by carrying out the steps of:
- first extracting (Ex_1) representative data of the printer model (3D_printer) from the printing request (Req_istr_3D);
- comparing the identified model with predefined models (3D_print_pred) available in the database platform (DB) in order to evaluate a conformity;
- in a case of conformity, generating a first partial authorisation (Auth 1) to generation of corresponding printing instructions (istr_3D);
wherein the conformity control module (305B) is further configured to verify the 3D printing instruction request (Req_istr_3D) by carrying out the steps of:
- secondly extracting (Ex_2) representative data of the raw material and/or raw material batch, 3D_print_auth received authorisations, representative data of a geolocation of the 3D printer, from the printing request (Req_istr_3D);
- comparing the extracted data with the corresponding data available in the database platform (DB) in order to evaluate a conformity;
- in a case of conformity of at least one of the extracted data, generating a second partial authorisation (Auth 2) to generation of corresponding printing instructions (istr_3D);
wherein the step of extracting the raw material and/or raw material batch type is automatically actuated by sensors inside the printer.

7. The system according to claim 6, wherein the conformity control module (305B) is configured to generate said confirmation for sending printing instructions (istr_3D_conf) if both the first partial authorisation (Auth_1) and the second partial authorisation (Auth_2) have been generated, in particular said second partial authorisation (Auth_2) being generated in a case of conformity of all the extracted data.

8. The system according to any one of the preceding claims 2 to 7,
wherein said univocal identification code of a piece to be printed, comprises at least one of an alphanumeric code, a barcode, a OR code, an RFID code.

9. The system according to claim 2, wherein said second calculation module (307B) is configured to aggregate a plurality of 3D prints of designs (11) that are compatible, possibly integrated by said integration module (307A), so that they can be made in the same printing operation.

10. The system according to any one of the preceding claims 2 to 9, wherein said 3D printer (3D_printer) comprises a print processing unit (60) provided with an execution module (61) configured to make a print following said machine printing instructions (istr_3D) received from said transmission module (306);
wherein said 3D printer (3D printer) is arranged to function on the basis of values of environmental and operating parameters (P_amb) and (P_op);
wherein said operating parameters (P_op) comprise one or more among:
- positioning of the printer;
- working temperatures of printer components;
- presence of power supply to the printer;
and
said environmental parameters (P_amb) comprise one or more among:
- ambient temperature;
- ambient moisture;
- geolocation.

11. The system according to claim 10, wherein
- said execution module (61) is configured to constantly send to said processing unit (30), during the printing, current values of the environmental parameters (P_amb_corr) and current values of the operating parameters (P_op_corr).

12. The system according to claim 11, wherein said processing unit (30) comprises:
- a fourth receiving module (310) configured to receive said current values of the environmental parameters (P_amb_corr) and current values of the operating parameters (P_op_corr);
- a printing control module (311) configured to control the printing by constantly comparing the printing conformity of the current values of the environmental (P_amb_corr) and operating (P_op_corr) parameters with corresponding predefined values of the environmental parameters (P_amb_PRED) and of the operating parameters (P_op_PRED) comprised in the database platform (BD);
wherein said printing control module (311) is configured, in a case of nonconformity during the printing, to:
- send an error message (Err_print) to the 3D printer (3D_printer) and
- record a nonconformity during the printing (Rec_Err_print) in the database platform (DB), possibly maintaining a recording of the printing activity up to that moment and any pieces produced;
wherein said printing control module (311) is further configured to generate a print certification message (PRINT OK) in a case of conformity maintained over a whole printing operation.

13. The system according to claim 12, wherein said integration module (307A) is configured to:
- receive said print certification message (PRINT_OK);
- archive the values of the environmental parameters and all the data relative to the print carried out in the database platform DB.

14. The system according to any one of the preceding claims 2 to 13, wherein said processing platform (10) further comprises:
- a transmission module (103) configured to transmit to said sharing platform (20) said design (11) to be 3D printed as a function of said design choices (Pi) which identify corresponding properties of said design (11).

15. A computer implemented method, for conditioned 3D printing, comprising steps of:
arranging a processing platform (10) in order to make a design (11) to be 3D printed, actuated by a designer (P);
defining, through said processing platform (10), design choices (Pi) that identify corresponding properties of said design (11) necessary for 3D printing in compliance with said design (11); and
processing said design (11) to be printed in 3D; and
defining an area as a function of said design choices (Pi) made, wherein the area contains a univocal means of identity of each 3D print that will be subsequently implemented starting from said design (11);
arranging a sharing platform (20) in which said method comprises steps, actuated by said sharing platform (20) of:
- receiving said design (11) to be 3D printed, made on the basis of said design choices (Pi) defined by the designer (P) which identify corresponding properties of said design (11) to be 3D printed;
- storing in a database platform (DB) the design (11) to be 3D printed;
wherein said method further comprises steps of
arranging a 3D printer (3D_printer) configurable for printing said design (11);
arranging a user processor (50) of a user (U), in which said user processor (50) is configured to communicate with said sharing platform (20) and/or with said 3D printer (3D_printer);
wherein said sharing platform (20) is configured to further carry out steps of:
- receiving from said user processor (50) an authorisation request for 3D printing (Req_Auth) for said design (11) based on authorisation parameters (Preq_auth),
wherein the authorisation parameters (Preq_auth) comprise one or more of at least:
- an identification code of the design (11) requested for 3D printing;
- a number of pieces to be printed (n_3D_auth);
- any customisations (Pers_11) allowed in the design (11);
- processing said received authorisation request for 3D printing (Req_Auth) and generating an authorisation to print (3D_print_auth) if said authorisation request parameters (Preq_auth) comply with predefined authorisation request parameters (Preq_auth_PRED) and sending an authorization to the user (U) for printing;
- receiving a 3D printing instruction request (Req_istr_3D) as a function of said authorisation to print (3D_print_auth) and of instruction request parameters (Preq_istr_3D);
- controlling a conformity of said 3D printing instruction request (Req_istr_3D) received and generating a confirmation for sending printing instructions (istr_3D_conf) if said printing instruction request parameters (Preq_istr_3D) comply with predefined instruction request parameters (Preq_auth_PRED);
integrating said design (11) with one or more indicative parameters of serial numbers, any customisations and any variants linked to geolocation, by communicating with said database platform (DB) in order to verify the current status of the serial numbers (ns), and by generating a new serial number assignable to the design (11) to be printed, wherein said serial number (ns) generated comprises a univocal identification code of a piece to be printed and is printed together with the piece to be printed, becoming a part thereof;
- generating said printing instructions (istr_3D) as a function of said generated confirmation to sending printing instructions (istr_3D_conf);
- sending said generated printing instructions (Istr_3D) to said 3D printer (3D_printer);
wherein said 3D printer (3D_printer) is arranged to make the steps of:
- remotely carrying out an authorised 3D printing of said design (11) stored in said database (DB) as a function of said printing instructions (Istr_3D) received;
the conditioned 3D printing (1) method making in this way said 3D printing of said design (11) by means of said 3D printer (3D_printer) as a function of said design choices (Pi) defined by said designer (P) in said processing platform (10), and as a function of said machine printing instructions (Istr_3D) sent by said sharing platform (20) following evaluation of conformity of said authorisation request parameters (Preq_auth) and said printing instruction request parameters (Preq_istr_3D).

## Patentansprüche

1. Gemeinsame Plattform (20) für bedingtes 3D-Drucken, umfassend:
- eine Verarbeitungseinheit (30), die wiederum Folgendes umfasst:
- ein erstes Empfangsmodul (301), das ausgelegt ist, um ein Design (11) zu empfangen, das in 3D gedruckt werden soll, das auf Grundlage von Designauswahlen (Pi) hergestellt wird, die vom Designer (P) definiert werden und die entsprechende Eigenschaften des Designs (11), das in 3D gedruckt werden soll, identifizieren;
- ein Speichermodul (303), das ausgelegt ist, um das Design (11), das in 3D gedruckt werden soll, in einer Datenbankplattform (DB) zu speichern;
- eine Benutzerschnittstelle (40) für einen Benutzer (U), die dazu ausgelegt ist, dem Benutzer (U) über einen Benutzerprozessor (50) nur die Konsultation des in der Datenbankplattform (DB) gespeicherten Designs (11) zur Verfügung zu stellen;
- ein zweites Empfangsmodul (304A), das ausgelegt ist, um von dem Benutzerprozessor (50) eine Berechtigungsanforderung für ein 3D-Drucken (Req_Auth) für das Design (11) auf Grundlage von Berechtigungsparametern (Preq_auth) zu empfangen, wobei die Berechtigungsparameter (Preq_auth) eines oder mehrere von mindestens umfassen:
- einen Identifikationscode des für das 3D-Drucken angeforderten Designs (11);
- eine Anzahl von zu druckenden Stücken (n_3D_auth);
- alle im Design (11) zulässigen Anpassungen (Pers_11);
- ein Berechtigungsmodul (305A), das mit dem zweiten Empfangsmodul (304) verbunden ist, ausgelegt zum:
- Verarbeiten der Berechtigungsanforderung (Req_Auth), die von dem Empfangsmodul (304) empfangen wurde;
- Generieren einer Berechtigung zum Drucken (3D_print_auth), wenn die Berechtigungsanforderungsparameter (Preq_auth) mit vordefinierten Berechtigungsanforderungsparametern (Preq_auth_PRED) übereinstimmen;
- Senden an den Benutzer (U) eine Berechtigung zum Drucken;
- ein drittes Empfangsmodul (304B), das ausgelegt ist, um eine 3D-Druckanweisungsanforderung (Req_istr_3D) auf Grundlage der Druckberechtigung (3D_print_auth) und von Anweisungsanforderungsparametern (Preq_istr_3D) zu empfangen;
- ein Konformitätskontrollmodul (305B), das mit dem dritten Empfangsmodul (304B) verbunden ist und ausgelegt ist, um eine Konformität der von dem Empfangsmodul (304B) empfangenen 3D-Druckanweisungsanforderung (Req_istr_3D) zu kontrollieren und eine Bestätigung zum Senden von Druckanweisungen (istr_3D_conf) zu generieren, wenn die Druckanweisungsanforderungsparameter (Preq_istr_3D) mit vordefinierten Anweisungsanforderungsparametern (Preq_auth_PRED) übereinstimmen;
- ein Berechnungsmodul (307B), das ausgelegt ist, um die Druckanweisungen (istr_3D) in Abhängigkeit von der generierten Bestätigung zum Senden von Druckanweisungen (istr_3D_conf) zu generieren;
- ein Übertragungsmodul (306), das ausgelegt ist, um die generierten Druckanweisungen (Istr_3D) an einen 3D-Drucker (3D_Printer) zu senden;
- ein Integrationsmodul (307A), das ausgelegt ist, um das Design (11) mit einem oder mehreren indikativen Parametern von Seriennummern, etwaigen Anpassungen und etwaigen Varianten, die mit der Geolokalisierung verbunden sind, zu integrieren, wobei die Integration vor der Generierung der Druckanweisungen (istr_3D) stattfindet;
wobei das Integrationsmodul (307A) ausgelegt ist, um mit der Datenbankplattform (DB) zu kommunizieren, um den aktuellen Status der Seriennummern (ns) zu verifizieren und eine neue Seriennummer zu generieren, die dem zu druckenden Design (11) zuweisbar ist;
wobei die generierte Seriennummer (ns) einen eindeutigen Identifikationscode eines zu druckenden Stücks umfasst und zusammen mit dem zu druckenden Stück gedruckt wird und ein Teil davon wird.

2. Bedingtes 3D-Drucksystem (1), umfassend:
- eine Verarbeitungsplattform (10), die von einem Designer (P) verwendet wird und angeordnet ist, um ein Design (11), das in 3D gedruckt werden soll, zu erstellen;
- eine gemeinsame Plattform (20), die dazu ausgelegt ist, das Design (11) auf bedingte Weise zu teilen,
- einen 3D-Drucker (3D_Printer), der zum Drucken des Designs (11) auslegbar ist;
- einen Benutzerprozessor (50) eines Benutzers (U), in dem der Benutzerprozessor (50) ausgelegt ist, um mit der gemeinsamen Plattform (20) und/oder mit dem 3D-Drucker (3D_Printer) zu kommunizieren;
wobei die Verarbeitungsplattform (10) Folgendes umfasst:
- ein erstes Auflegungsmodul (102), das ausgelegt ist, um Designentscheidungen (Pi) zu definieren, die entsprechende Eigenschaften des Designs (11) identifizieren, die für das 3D-Drucken in Übereinstimmung mit dem Design (11) erforderlich sind;
- eine Modellierungseinheit (101), die ausgelegt ist, zum:
- Verarbeiten des Designs (11), das in 3D gedruckt werden soll;
- Definieren eines Bereichs in Abhängigkeit von der getroffenen Designauswahl (Pi), wobei der Bereich eindeutige Identitätsmittel eines jeden 3D-Drucks enthält, das anschließend ausgehend von dem Design (11) implementiert werden wird;
wobei die gemeinsame Plattform (20) Folgendes umfasst:
- eine Verarbeitungseinheit (30), die wiederum Folgendes umfasst:
- ein erstes Empfangsmodul (301), das ausgelegt ist, um ein Design (11) zu empfangen, das in 3D gedruckt werden soll, das auf der Grundlage von Designauswahlen (Pi) hergestellt wird, die vom Designer (P) definiert werden und die entsprechende Eigenschaften des Designs (11), das in 3D gedruckt werden soll, identifizieren;
- ein Speichermodul (303), das ausgelegt ist, um das Design (11), das in 3D gedruckt werden soll, in einer Datenbankplattform (DB) zu speichern;
- eine Benutzerschnittstelle (40) für einen Benutzer (U), die dazu ausgelegt ist, über den Benutzerprozessor (50) nur die Konsultation des in der Datenbankplattform (DB) gespeicherten Designs (11) zur Verfügung zu stellen;
- ein zweites Empfangsmodul (304A), das ausgelegt ist, um von dem Benutzerprozessor (50) eine Berechtigungsanforderung für ein 3D-Drucken (Req_Auth) für das Design (11) auf Grundlage von Berechtigungsparametern (Preq_auth) zu empfangen, die eines oder mehrere von mindestens umfassen:
- einen Identifikationscode des für das 3D-Drucken angeforderten Designs (11);
- eine Anzahl von zu druckenden Stücken (n_3D_auth);
- alle im Design (11) zulässigen Anpassungen (Pers_11);
- ein Berechtigungsmodul (305A), das mit dem zweiten Empfangsmodul (304) verbunden ist, ausgelegt zum:
- Verarbeiten der von dem Empfangsmodul (304) empfangenen Anforderung (Req_Auth);
- Generieren einer Berechtigung zum Drucken (3D_print_auth), wenn die Berechtigungsanforderungsparameter (Preq_auth) mit vordefinierten Berechtigungsanforderungsparametern (Preq_auth_PRED) übereinstimmen;
- Senden an den Benutzer (U) eine Berechtigung zum Drucken;
- ein drittes Empfangsmodul (304B), das ausgelegt ist, um eine 3D-Druckanweisungsanforderung (Req_istr_3D) auf Grundlage der Druckberechtigung (3D_print_auth) und von Anweisungsanforderungsparametern (Preq_istr_3D) zu empfangen;
- ein Konformitätskontrollmodul (305B), das mit dem dritten Empfangsmodul (304B) verbunden ist und ausgelegt ist, um eine Konformität der von dem dritten Empfangsmodul (304B) empfangenen 3D-Druckanweisungsanforderung (Req_istr_3D) zu kontrollieren und eine Bestätigung zum Senden von Druckanweisungen (istr_3D_conf) zu generieren, wenn die Druckanweisungsanforderungsparameter (Preq_istr_3D) mit vordefinierten Anweisungsanforderungsparametern (Preq_auth_PRED) übereinstimmen;
- ein Berechnungsmodul (307B), das ausgelegt ist, um die Druckanweisungen (istr_3D) in Abhängigkeit von der generierten Bestätigung zum Senden von Druckanweisungen (istr_3D_conf) zu generieren;
- ein Übertragungsmodul (306), das ausgelegt ist, um die generierten Druckanweisungen (Istr_3D) an den 3D-Drucker (3D_Printer) zu senden;
- ein Integrationsmodul (307A), das ausgelegt ist, um das Design (11) mit einem oder mehreren indikativen Parametern von Seriennummern, etwaigen Anpassungen und etwaigen Varianten, die mit der Geolokalisierung verbunden sind, zu integrieren, wobei die Integration vor der Generierung der Druckanweisungen (istr_3D) stattfindet;
wobei das Integrationsmodul (307A) ausgelegt ist, um mit der Datenbankplattform (DB) zu kommunizieren, um den aktuellen Status der Seriennummern (ns) zu verifizieren und eine neue Seriennummer zu generieren, die dem zu druckenden Design (11) zuweisbar ist;
wobei die generierte Seriennummer (ns) einen eindeutigen Identifikationscode eines zu druckenden Stücks umfasst und zusammen mit dem zu druckenden Stück gedruckt wird und ein Teil davon wird;
wobei der 3D-Drucker (3D_Printer) angeordnet ist, um ein berechtigten 3D-Drucken des Designs (11), das in der Datenbank (DB) gespeichert ist, in Abhängigkeit von den Druckanweisungen (Istr_3D), die von dem Übertragungsmodul (306) empfangen werden, aus der Ferne durchzuführen;
das System für bedingtes 3D-Drucken (1), das das 3D-Drucken des Designs (11) mittels des 3D-Druckers (3D_Printer) in Abhängigkeit von den vom Designer (P) in der Verarbeitungsplattform (10) definierten Designentscheidungen (Pi) und in Abhängigkeit von den von der gemeinsamen Plattform (20) gesendeten Maschinenanweisungen (Istr_3D) nach Bewertung der Konformität der Berechtigungsanforderungsparameter (Preq_auth) und der Druckanweisungsanforderungsparameter (Preq_istr_3D) durchführt.

3. System nach Anspruch 2, wobei der 3D-Drucker (3D_Printer) ferner angeordnet ist, um die 3D-Druckanweisungsanforderung (Req_istr_3D) auf der Grundlage der Druckberechtigung (3D_print_auth) und der Anweisungsanforderungsparameter (Preq_istr_3D) an das dritte Empfangsmodul (304B) zu senden.

4. System nach Anspruch 2 oder 3, wobei die vom Designer (P) definierten Designentscheidungen (Pi) repräsentativ für physikalisch-chemische Eigenschaften und/oder Einschränkungen im Druckprozess sind, in Abhängigkeit davon das 3D-Drucken mit dem 3D-Drucker (3D_Printer) durchgeführt werden soll.

5. System nach einem der vorhergehenden Ansprüche, wobei die eindeutigen Identitätsmittel eine Seriennummer umfassen.

6. System nach einem der vorhergehenden Ansprüche 2 bis 5, wobei das Konformitätskontrollmodul (305B) ausgelegt ist, um die 3D-Druckanweisungsanforderung (Req_istr_3D) durch Ausführen der folgenden Schritte zu verifizieren:
- erstes Extrahieren (Ex_1) repräsentativer Daten des Druckermodells (3D_Printer) aus der Druckanforderung (Req_istr_3D);
- Vergleichen des identifizierten Modells mit vordefinierten Modellen (3D_print_pred), die in der Datenbankplattform (DB) verfügbar sind, um eine Konformität zu bewerten;
- im Konformitätsfall, Generieren einer ersten Teilberechtigung (Auth 1) zur Generierung entsprechender Druckanweisungen (istr_3D);
wobei das Konformitätskontrollmodul (305B) ferner ausgelegt ist, um die 3D-Druckanweisungsanforderung (Req_istr_3D) durch Ausführen der folgenden Schritte zu verifizieren:
- zweitens Extrahieren (Ex_2) repräsentativer Daten des Rohmaterials und/oder der Rohmaterialcharge, 3D_print_auth empfangene Berechtigungen, repräsentativer Daten einer Geolokalisierung des 3D-Druckers, aus der Druckanforderung (Req_istr_3D);
- Vergleichen der extrahierten Daten mit den entsprechenden Daten, die in der Datenbankplattform (DB) verfügbar sind, um eine Konformität zu bewerten;
- im Konformitätsfall von mindestens einer der extrahierten Daten, Generieren einer zweiten Teilberechtigung (Auth 2) zur Generierung entsprechender Druckanweisungen (istr_3D);
wobei der Schritt zum Extrahieren des Rohmaterials und/oder des Rohmaterialchargen-Typs automatisch durch Sensoren innerhalb des Druckers betätigt wird.

7. System nach Anspruch 6, wobei das Konformitätskontrollmodul (305B) dazu ausgelegt ist, die Bestätigung zum Senden von Druckanweisungen (istr_3D_conf) zu generieren, wenn sowohl die erste Teilberechtigung (Auth_1) als auch die zweite Teilberechtigung (Auth_2) generiert wurden, wobei insbesondere die zweite Teilberechtigung (Auth_2) in einem Konformitätsfall aller extrahierten Daten generiert wurde.

8. System nach einem der vorhergehenden Ansprüche 2 bis 7,
wobei der eindeutige Identifikationscode eines zu druckenden Stücks mindestens einen von einem alphanumerischen Code, einem Barcode, einem QR-Code und einem RFID-Code umfasst.

9. System nach Anspruch 2, wobei das zweite Berechnungsmodul (307B) ausgelegt ist, um eine Vielzahl von 3D-Drucken von Designs (11) zu aggregieren, die kompatibel sind, möglicherweise integriert durch das Integrationsmodul (307A), so dass sie in demselben Druckvorgang hergestellt werden können.

10. System nach einem der vorhergehenden Ansprüche 2 bis 9, wobei der 3D-Drucker (3D_Printer) eine Druckverarbeitungseinheit (60) umfasst, die mit einem Ausführungsmodul (61) versehen ist, das dazu ausgelegt ist, einen Druck gemäß den von dem Übertragungsmodul (306) empfangenen Maschinendruckanweisungen (istr_3D) auszuführen;
wobei der 3D-Drucker (3D printer) angeordnet ist, um auf Grundlage von Werten von Umgebungs- und Betriebsparametern (P_amb) und (P_op) zu funktionieren; wobei die Betriebsparameter (P_op) einen oder mehrere aus Folgendem umfassen:
- Positionierung des Druckers;
- Betriebstemperaturen der Druckerkomponenten;
- Vorhandensein einer Stromversorgung zum Drucker;
und
wobei die Umgebungsparameter (P_amb) einen oder mehrere der folgenden umfassen:
- Umgebungstemperatur;
- Umgebungsfeuchtigkeit;
- Geolokalisierung.

11. System nach Anspruch 10, wobei
- das Ausführungsmodul (61) dazu ausgelegt ist, während des Druckens ständig aktuelle Werte der Umgebungsparameter (P_amb_corr) und aktuelle Werte der Betriebsparameter (P_op_corr) an die Verarbeitungseinheit (30) zu senden.

12. System nach Anspruch 11, wobei die Verarbeitungseinheit (30) Folgendes umfasst:
- ein viertes Empfangsmodul (310), das ausgelegt ist, um die aktuellen Werte der Umgebungsparameter (P_amb_corr) und die aktuellen Werte der Betriebsparameter (P_op_corr) zu empfangen;
- ein Druckkontrollmodul (311), das ausgelegt ist, um den Druck durch ständiges Vergleichen der Druckkonformität der aktuellen Werte der Umgebungsparameter (P_amb_corr) und Betriebsparameter (P_op_corr) mit entsprechenden vordefinierten Werten der Umgebungsparameter (P_amb_PRED) und der Betriebsparameter (P_op_PRED), die in der Datenbankplattform (BD) enthalten sind, zu kontrollieren;
wobei das Druckkontrollmodul (311) ausgelegt ist, um im Falle einer Nichtkonformität während des Druckens:
- eine Fehlermeldung (Err_Print) an den 3D-Drucker (3D_Printer) zu senden und
- eine Nichtkonformität während des Druckens (Rec_Err_Print) in der Datenbankplattform (DB) aufzuzeichnen, wobei möglicherweise eine Aufzeichnung der Druckaktivität bis zu jenem Zeitpunkt und etwaiger produzierten Stücke beibehalten wird;
wobei das Druckkontrollmodul (311) ferner dazu ausgelegt ist, eine Druckzertifizierungsnachricht (PRINT OK) in einem Fall von Konformität zu generieren, die über einen gesamten Druckvorgang beibehalten wird.

13. System nach Anspruch 12, wobei das Integrationsmodul (307A) ausgelegt ist, zum:
- Empfangen der Druckzertifizierungsnachricht (PRINT_OK);
- Archivieren der Werte der Umgebungsparameter und aller Daten relativ zu dem in der Datenbankplattform DB durchgeführten Druck.

14. System nach einem der vorhergehenden Ansprüche 2 bis 13, wobei die Verarbeitungsplattform (10) ferner Folgendes umfasst:
- ein Übertragungsmodul (103), das ausgelegt ist, um das Design (11), das in 3D gedruckt werden soll, in Abhängigkeit von den Designauswahlen (Pi), die entsprechende Eigenschaften des Designs (11) identifizieren, an die gemeinsame Plattform (20) zu übertragen.

15. Computerimplementiertes Verfahren für bedingtes 3D-Drucken, umfassend die folgenden Schritte:
Anordnen einer Verarbeitungsplattform (10), um ein Design (11), das in 3D gedruckt werden soll, zu erstellen, das von einem Designer (P) betätigt wird;
Definieren durch die Verarbeitungsplattform (10) von Designentscheidungen (Pi), die entsprechende Eigenschaften des Designs (11) identifizieren, die für das 3D-Drucken in Übereinstimmung mit dem Design (11) erforderlich sind; und
Verarbeiten des Designs (11), das in 3D gedruckt werden soll; und
Definieren eines Bereichs in Abhängigkeit von der getroffenen Designauswahl (Pi), wobei der Bereich ein eindeutiges Identitätsmittel jedes 3D-Drucks enthält, das anschließend ausgehend von dem Design (11) implementiert wird;
Anordnen einer gemeinsamen Plattform (20), in der das Verfahren Schritte umfasst, die von der gemeinsamen Plattform (20) betätigt werden, zum:
- Empfangen des Designs (11), das 3D-gedruckt werden soll, auf der Grundlage von Designauswahlen (Pi) hergestellt wird, die vom Designer (P) definiert werden und die entsprechende Eigenschaften des Designs (11), das in 3D gedruckt werden soll, identifizieren;
- Speichern des Designs (11), das in 3D gedruckt werden soll, in einer Datenbankplattform (DB);
wobei das Verfahren ferner die folgenden Schritte umfasst
Anordnen eines 3D-Druckers (3D_Printer), der zum Drucken des Designs (11) auslegbar ist;
Anordnen eines Benutzerprozessors (50) eines Benutzers (U), in dem der Benutzerprozessor (50) ausgelegt ist, um mit der gemeinsamen Plattform (20) und/oder mit dem 3D-Drucker (3D_Printer) zu kommunizieren;
wobei die gemeinsame Plattform (20) ausgelegt ist, um ferner die folgenden Schritte auszuführen:
- Empfangen einer Berechtigungsanforderung für das 3D-Drucken (Req_Auth) für das Design (11) auf Grundlage von Berechtigungsparametern (Preq_auth) von dem Benutzerprozessor (50),
wobei die Berechtigungsparameter (Preq_auth) eines oder mehrere von mindestens umfassen:
- einen Identifikationscode des für das 3D-Drucken angeforderten Designs (11);
- eine Anzahl von zu druckenden Stücken (n_3D_auth);
- alle im Design (11) zulässigen Anpassungen (Pers_11);
- Verarbeiten der empfangenen Berechtigungsanforderung für das 3D-Drucken (Req_Auth) und Generieren einer Berechtigung zum Drucken (3D_Print_auth), wenn die Berechtigungsanforderungsparameter (Preq_auth) mit vordefinierten Berechtigungsanforderungsparametern (Preq_auth_PRED) übereinstimmen, und Senden einer Berechtigung zum Drucken an den Benutzer (U);
- Empfangen einer 3D-Druckanweisungsanforderung (Req_istr_3D) in Abhängigkeit von der Druckberechtigung (3D_print_auth) und von Anweisungsanforderungsparametern (Preq_istr_3D);
- Kontrollieren einer Konformität der empfangenen 3D-Druckanweisungsanforderung (Req_istr_3D) und Generieren einer Bestätigung zum Senden von Druckanweisungen (istr_3D_conf), wenn die Druckanweisungsanforderungsparameter (Preq_istr_3D) mit vordefinierten Anweisungsanforderungsparametern (Preq_auth_PRED) übereinstimmen;
Integrieren des Designs (11) mit einem oder mehreren indikativen Parametern von Seriennummern, etwaigen Anpassungen und etwaigen Varianten, die mit der Geolokalisierung verbunden sind, durch Kommunizieren mit der Datenbankplattform (DB), um den aktuellen Status der Seriennummern (ns) zu verifizieren, und durch Generieren einer neuen Seriennummer, die dem zu druckenden Design (11) zuweisbar ist, wobei die generierte Seriennummer (ns) einen eindeutigen Identifikationscode eines zu druckenden Stücks umfasst und zusammen mit dem zu druckenden Stück gedruckt wird, wobei sie ein Teil davon wird;
- Generieren der Druckanweisungen (istr_3D) in Abhängigkeit von der generierten Bestätigung zum Senden von Druckanweisungen (istr_3D_conf);
- Senden der generierten Druckanweisungen (Istr_3D) an den 3D-Drucker (3D_Printer);
wobei der 3D-Drucker (3D printer) angeordnet ist, um die folgenden Schritte auszuführen:
- Ausführen aus der Ferne eines berechtigten 3D-Drucks des Designs (11), das in der Datenbank (DB) gespeichert ist, in Abhängigkeit von den empfangenen Druckanweisungen (Istr_3D);
das Verfahren für bedingtes 3D-Drucken (1), das auf diese Weise das 3D-Drucken des Designs (11) mittels des 3D-Druckers (3D_printer) in Abhängigkeit von den vom Designer (P) in der Verarbeitungsplattform (10) definierten Designentscheidungen (Pi) und in Abhängigkeit von den von der gemeinsamen Plattform (20) gesendeten Maschinenanweisungen (Istr_3D) nach Bewertung der Konformität der Berechtigungsanforderungsparameter (Preq_auth) und der Druckanweisungsanforderungsparameter (Preq_istr_3D) durchführt.

## Revendications

1. Plateforme de partage (20), pour impression 3D conditionnée, comprenant :
- une unité de traitement (30), comprenant à son tour :
- un premier module de réception (301) configuré pour recevoir un projet (11) à imprimer en 3D, réalisé sur la base de choix de conception (Pi) définis par le concepteur (P) qui identifient les propriétés correspondantes dudit projet (11) à imprimer en 3D ;
- un module de stockage (303) configuré pour stocker le projet (11) à imprimer en 3D dans une plateforme de base de données (DB) ;
- une interface utilisateur (40) destinée à un utilisateur (U), configurée pour mettre à la disposition dudit utilisateur (U), via un processeur utilisateur (50), uniquement la consultation du projet (11) stocké dans ladite plateforme de base de données (DB) ;
- un deuxième module de réception (304A) configuré pour recevoir dudit processeur utilisateur (50) une demande d'autorisation d'une impression 3D (Req_Auth) pour ledit projet (11) sur la base de paramètres d'autorisation (Preq_auth), lesdits paramètres d'autorisation (Preq_auth) comprenant un ou plusieurs des éléments suivants d'au moins :
- un code d'identification du projet (11) demandé pour l'impression 3D ;
- un nombre de pièces à imprimer (n_3D_auth) ;
- toute personnalisation (Pers_11) autorisée dans le projet (11) ;
- un module d'autorisation (305A) relié au deuxième module de réception (304), configuré pour :
- traiter ladite demande d'autorisation (Req_Auth) reçue dudit module de réception (304) ;
- générer une autorisation d'impression (3D_print_auth) si lesdits paramètres de demande d'autorisation (Preq_auth) sont conformes aux paramètres de demande d'autorisation prédéfinis (Preq_auth_PRED) ;
- envoyer une autorisation d'impression à l'utilisateur (U) ;
- un troisième module de réception (304B) configuré pour recevoir une demande d'instructions d'impression 3D (Req_istr_3D) sur la base de ladite autorisation d'impression (3D_print_auth) et des paramètres de demande d'instructions (Preq_istr_3D) ;
- un module de contrôle de conformité (305B), relié au troisième module de réception (304B), configuré pour contrôler une conformité de ladite demande d'instructions d'impression 3D (Req_istr_3D) reçue dudit module de réception (304B) et pour générer une confirmation d'envoi d'instructions d'impression (istr_3D_conf) si lesdits paramètres de demande d'instructions d'impression (Preq_istr_3D) sont conformes aux paramètres de demande d'instructions prédéfinis (Preq_auth_PRED) ;
- un module de calcul (307B) configuré pour générer lesdites instructions d'impression (istr_3D) en fonction de ladite confirmation générée pour l'envoi des instructions d'impression (istr_3D_conf) ;
- un module de transmission (306) configuré pour envoyer lesdites instructions d'impression générées (Istr_3D) à une imprimante 3D (3D_printer) ;
- un module d'intégration (307A) configuré pour intégrer ledit projet (11) avec un ou plusieurs paramètres indicatifs de numéros de série, toute personnalisation et toute variante liées à la géolocalisation, ladite intégration ayant lieu avant la génération des instructions d'impression (istr_3D) ;
dans laquelle ledit module d'intégration (307A) est configuré pour communiquer avec ladite plateforme de base de données (DB), afin de vérifier l'état actuel des numéros de série (ns) et de générer un nouveau numéro de série attribuable au projet (11) à imprimer ;
dans laquelle ledit numéro de série (ns) généré comprend un code d'identification univoque d'une pièce à imprimer et est imprimé avec la pièce à imprimer, devenant ainsi une partie de celle-ci.

2. Système d'impression 3D conditionné (1), comprenant :
- une plateforme de traitement (10), utilisée par un concepteur (P), mise en place pour créer un projet (11) à imprimer en 3D ;
- une plateforme de partage (20), configurée pour partager ledit projet (11) d'une manière conditionnée,
- une imprimante 3D (3D_printer) pouvant être configurée pour imprimer ledit projet (11) ;
- un processeur utilisateur (50) d'un utilisateur (U), dans lequel ledit processeur utilisateur (50) est configuré pour communiquer avec ladite plateforme de partage (20) et/ou avec ladite imprimante 3D (3D_printer) ;
dans laquelle ladite plateforme de traitement (10) comprend :
- un premier module de configuration (102) configuré pour définir des choix de conception (Pi) qui identifient les propriétés correspondantes dudit projet (11) nécessaires à l'impression 3D conformément audit projet (11) ;
- une unité de modélisation (101) configurée pour :
- traiter ledit projet (11) à imprimer en 3D ;
- définir une zone en fonction dudit choix de conception (Pi) effectué, dans laquelle la zone contient un moyen univoque d'identité de chaque impression 3D qui sera ultérieurement mise en œuvre à partir dudit projet (11) ; dans laquelle ladite plateforme de partage (20) comprend :
- une unité de traitement (30), comprenant à son tour :
- un premier module de réception (301) configuré pour recevoir ledit projet (11) à imprimer en 3D, réalisé sur la base de choix de conception (Pi), étant définis par le concepteur (P), identifiant les propriétés correspondantes dudit projet (11) à imprimer en 3D ;
- un module de stockage (303) configuré pour stocker le projet (11) à imprimer en 3D dans une plateforme de base de données (DB) ;
- une interface utilisateur (40) destinée à un utilisateur (U), configurée pour rendre uniquement la consultation du projet (11) stocké dans ladite plateforme de base de données (DB) disponible via ledit processeur utilisateur (50) ;
- un deuxième module de réception (304A) configuré pour recevoir dudit processeur utilisateur (50) une demande d'autorisation d'impression 3D (Req_Auth) pour ledit projet (11) sur la base de paramètres d'autorisation (Preq_auth) comprenant un ou plusieurs des éléments suivants d'au moins :
- un code d'identification du projet (11) demandé pour l'impression 3D ;
- un nombre de pièces à imprimer (n_3D_auth) ;
- toute personnalisation (Pers_11) autorisée dans le projet (11) ;
- un module d'autorisation (305A) relié au deuxième module de réception (304), configuré pour :
- traiter ladite demande (Req_Auth) reçue dudit module de réception (304) ;
- générer une autorisation d'impression (3D_print_auth) si lesdits paramètres de demande d'autorisation (Preq_auth) sont conformes aux paramètres de demande d'autorisation prédéfinis (Preq_auth_PRED) ;
- envoyer une autorisation d'impression à l'utilisateur (U) ;
- un troisième module de réception (304B) configuré pour recevoir une demande d'instructions d'impression 3D (Req_istr_3D) sur la base de ladite autorisation d'impression (3D_print_auth) et des paramètres de demande d'instructions (Preq_istr_3D) ;
- un module de contrôle de conformité (305B), relié au troisième module de réception (304B), configuré pour contrôler la conformité de ladite demande d'instructions d'impression 3D (Req_istr_3D) reçue dudit troisième module de réception (304B) et pour générer une confirmation d'envoi d'instructions d'impression (istr_3D_conf) si lesdits paramètres de demande d'instructions d'impression (Preq_istr_3D) sont conformes aux paramètres de demande d'instructions prédéfinis (Preq_auth_PRED) ;
- un module de calcul (307B) configuré pour générer lesdites instructions d'impression (istr_3D) en fonction de ladite confirmation générée pour l'envoi des instructions d'impression (istr_3D_conf) ;
- un module de transmission (306) configuré pour envoyer lesdites instructions d'impression générées (Istr_3D) à ladite imprimante 3D (3D_printer) ;
- un module d'intégration (307A) configuré pour intégrer ledit projet (11) avec un ou plusieurs paramètres indicatifs de numéros de série, toute personnalisation et toute variante liées à la géolocalisation, ladite intégration ayant lieu avant la génération des instructions d'impression (istr_3D) ;
dans laquelle ledit module d'intégration (307A) est configuré pour communiquer avec ladite plateforme de base de données (DB), afin de vérifier l'état actuel des numéros de série (ns) et de générer un nouveau numéro de série attribuable au projet (11) à imprimer ;
dans laquelle ledit numéro de série (ns) généré comprend un code d'identification univoque d'une pièce à imprimer et est imprimé avec la pièce à imprimer, devenant ainsi une partie de celle-ci ;
dans laquelle ladite imprimante 3D (3D_printer) est mise en place pour effectuer à distance une impression 3D autorisée dudit projet (11) stocké dans ladite base de données (DB) en fonction desdites instructions d'impression (Istr_3D) reçues dudit module de transmission (306) ;
le système d'impression 3D conditionné (1) réalisant ladite impression 3D dudit projet (11) au moyen de ladite imprimante 3D (3D_printer) en fonction desdits choix de conception (Pi) définis par ledit concepteur (P) dans ladite plateforme de traitement (10), et en fonction desdites instructions machine (Istr_3D) envoyées par ladite plateforme de partage (20) suite à l'évaluation de la conformité desdits paramètres de demande d'autorisation (Preq_auth) et desdits paramètres de demande d'instructions d'impression (Preq_istr_3D).

3. Système selon la revendication 2, dans lequel ladite imprimante 3D (3D_printer) est en outre mise en place pour envoyer au troisième module de réception (304B) ladite demande d'instructions d'impression 3D (Req_istr_3D) sur la base de ladite autorisation d'impression (3D_print_auth) et desdits paramètres de demande d'instructions (Preq_istr_3D).

4. Système selon la revendication 2 ou 3, dans lequel lesdits choix de conception (Pi) définis par le concepteur (P) sont représentatifs des caractéristiques physico-chimiques et/ou des contraintes du processus d'impression en fonction desquelles l'impression 3D avec ladite imprimante 3D (3D_printer) doit être réalisée.

5. Système selon l'une quelconque des revendications précédentes, dans lequel les moyens univoques d'identité comprennent un numéro de série.

6. Système selon l'une quelconque des revendications précédentes 2 à 5, dans lequel ledit module de contrôle de conformité (305B) est configuré pour vérifier la demande d'instructions d'impression 3D (Req_istr_3D) en effectuant les étapes suivantes :
- premièrement, extraire (Ex_1), de la demande d'impression (Req_istr_3D), des données représentatives du modèle d'imprimante (3D_printer) ;
- comparer le modèle identifié avec des modèles prédéfinis (3D_print_pred) disponibles dans la plateforme de base de données (DB) afin d'évaluer une conformité ;
- en cas de conformité, générer une première autorisation partielle (Auth 1) pour la génération des instructions d'impression correspondantes (istr_3D) ;
dans lequel le module de contrôle de conformité (305B) est en outre configuré pour vérifier la demande d'instructions d'impression 3D (Req_istr_3D) en effectuant les étapes de :
- deuxièmement, extraire (Ex_2), de la demande d'impression (Req_istr_3D), des données représentatives de la matière première et/ou du lot de matières premières, des autorisations reçues par 3D_print_auth, des données représentatives d'une géolocalisation de l'imprimante 3D ;
- comparer les données extraites aux données correspondantes disponibles dans la plateforme de base de données (DB) afin d'évaluer une conformité ;
- en cas de conformité d'au moins une des données extraites, générer une seconde autorisation partielle (Auth 2) pour la génération des instructions d'impression correspondantes (istr_3D) ;
dans lequel l'étape d'extraction de la matière première et/ou du type de lot de matières premières est automatiquement déclenchée par des capteurs situés à l'intérieur de l'imprimante.

7. Système selon la revendication 6, dans lequel le module de contrôle de conformité (305B) est configuré pour générer ladite confirmation d'envoi des instructions d'impression (istr_3D_conf) si la première autorisation partielle (Auth_1) et la seconde autorisation partielle (Auth_2) ont été générées, en particulier ladite seconde autorisation partielle (Auth_2) étant générée en cas de conformité de toutes les données extraites.

8. Système selon l'une quelconque des revendications précédentes 2 à 7,
dans lequel ledit code d'identification univoque d'une pièce à imprimer comprend au moins un code parmi un code alphanumérique, un code-barres, un code QR, un code RFID.

9. Système selon la revendication 2, dans lequel ledit second module de calcul (307B) est configuré pour agréger une pluralité d'impressions 3D de projets (11) étant compatibles, éventuellement intégrées par ledit module d'intégration (307A), afin qu'elles puissent être réalisées lors de la même opération d'impression.

10. Système selon l'une quelconque des revendications précédentes 2 à 9, dans lequel ladite imprimante 3D (3D_printer) comprend une unité de traitement d'impression (60) dotée d'un module d'exécution (61) configuré pour réaliser une impression suivant lesdites instructions d'impression machine (istr_3D) reçues dudit module de transmission (306) ;
dans lequel ladite imprimante 3D (3D_printer) est mise en place pour fonctionner sur la base de valeurs de paramètres environnementaux et de fonctionnement (P_amb) et (P_op) ;
dans lequel lesdits paramètres de fonctionnement (P_op) comprennent un ou plusieurs éléments parmi :
- le positionnement de l'imprimante ;
- les températures de fonctionnement des composants de l'imprimante ;
- la présence d'une alimentation électrique à l'imprimante ;
et
lesdits paramètres environnementaux (P_amb) comprennent un ou plusieurs éléments parmi :
- la température ambiante ;
- l'humidité ambiante ;
- la géolocalisation.

11. Système selon la revendication 10, dans lequel
- ledit module d'exécution (61) est configuré pour envoyer en permanence à ladite unité de traitement (30), pendant l'impression, les valeurs actuelles des paramètres environnementaux (P_amb_corr) et les valeurs actuelles des paramètres de fonctionnement (P_op_corr).

12. Système selon la revendication 11, dans lequel ladite unité de traitement (30) comprend :
- un quatrième module de réception (310) configuré pour recevoir lesdites valeurs actuelles des paramètres environnementaux (P_amb_corr) et les valeurs actuelles des paramètres de fonctionnement (P_op_corr) ;
- un module de contrôle d'impression (311) configuré pour contrôler l'impression en comparant en permanence la conformité de l'impression des valeurs actuelles des paramètres environnementaux (P_amb_corr) et de fonctionnement (P_op_corr) aux valeurs prédéfinies correspondantes des paramètres environnementaux (P_amb_PRED) et des paramètres de fonctionnement (P_op_PRED) compris dans la plateforme de base de données (BD) ;
dans lequel ledit module de contrôle d'impression (311) est configuré, en cas de non-conformité au cours de l'impression, pour :
- envoyer un message d'erreur (Err_print) à l'imprimante 3D (3D_printer) et
- enregistrer une non-conformité pendant l'impression (Rec_Err_print) dans la plateforme de base de données (DB), en conservant éventuellement un enregistrement de l'activité d'impression jusqu'à ce moment et de toutes les pièces produites ;
dans lequel ledit module de contrôle d'impression (311) est en outre configuré pour générer un message de certification d'impression (PRINT OK) en cas de conformité maintenue sur l'ensemble de l'opération d'impression.

13. Système selon la revendication 12, dans lequel ledit module d'intégration (307A) est configuré pour :
- recevoir ledit message de certification d'impression (PRINT_OK) ;
- archiver les valeurs des paramètres environnementaux et toutes les données relatives à l'impression réalisée dans la plateforme de base de données DB.

14. Système selon l'une quelconque des revendications précédentes 2 à 13, dans lequel ladite plateforme de traitement (10) comprend en outre :
- un module de transmission (103) configuré pour transmettre à ladite plateforme de partage (20) ledit projet (11) à imprimer en 3D en fonction desdits choix de conception (Pi) qui identifient les propriétés correspondantes dudit projet (11).

15. Procédé mis en œuvre par ordinateur, pour l'impression 3D conditionnée, comprenant les étapes suivantes :
mettre en place une plateforme de traitement (10), afin de réaliser un projet (11) à imprimer en 3D, actionnée par un concepteur (P) ;
définir, par le biais de ladite plateforme de traitement (10), des choix de conception (Pi) qui identifient les propriétés correspondantes dudit projet (11) nécessaires à l'impression en 3D conformément audit projet (11) ; et
traiter ledit projet (11) à imprimer en 3D ; et
- définir une zone en fonction desdits choix de conception (Pi) effectués, dans lequel la zone contient un moyen univoque d'identité de chaque impression 3D qui sera ultérieurement mise en œuvre à partir dudit projet (11) ;
mettre en place une plateforme de partage (20) dans laquelle ledit procédé comprend des étapes, actionnées par ladite plateforme de partage (20), consistant à :
- recevoir ledit projet (11) à imprimer en 3D, réalisé sur la base desdits choix de conception (Pi), définis par le concepteur (P), qui identifient les propriétés correspondantes dudit projet (11) à imprimer en 3D ;
- stocker dans une plateforme de base de données (DB) le projet (11) à imprimer en 3D ;
dans lequel ledit procédé comprend en outre des étapes consistant à
mettre en place une imprimante 3D (3D_printer) pouvant être configurée pour imprimer ledit projet (11) ;
mettre en place un processeur utilisateur (50) d'un utilisateur (U), dans lequel ledit processeur utilisateur (50) est configuré pour communiquer avec ladite plateforme de partage (20) et/ou avec ladite imprimante 3D (3D_printer) ;
dans lequel ladite plateforme de partage (20) est configurée pour effectuer en outre les étapes suivantes :
- recevoir dudit processeur utilisateur (50) une demande d'autorisation d'impression 3D (Req_Auth) pour ledit projet (11) sur la base de paramètres d'autorisation (Preq_auth),
dans lequel les paramètres d'autorisation (Preq_auth) comprennent un ou plusieurs des éléments suivants d'au moins :
- un code d'identification du projet (11) demandé pour l'impression 3D ;
- un nombre de pièces à imprimer (n_3D_auth) ;
- toute personnalisation (Pers_11) autorisée dans le projet (11) ;
- traiter ladite demande d'autorisation reçue pour l'impression 3D (Req_Auth) et générer une autorisation d'impression (3D_print_auth) si lesdits paramètres de demande d'autorisation (Preq_auth) sont conformes aux paramètres de demande d'autorisation prédéfinis (Preq_auth_PRED) et envoyer une autorisation à l'utilisateur (U) pour l'impression ;
- recevoir une demande d'instructions d'impression 3D (Req_istr_3D) en fonction de ladite autorisation d'impression (3D_print_auth) et des paramètres de demande d'instructions (Preq_istr_3D) ;
- contrôler une conformité de ladite demande d'instructions d'impression 3D (Req_istr_3D) reçue et générer une confirmation d'envoi d'instructions d'impression (istr_3D_conf) si lesdits paramètres de demande d'instructions d'impression (Preq_istr_3D) sont conformes aux paramètres prédéfinis de demande d'instructions (Preq_auth_PRED) ;
intégrer ledit projet (11) à un ou plusieurs paramètres indicatifs de numéros de série, à toute personnalisation et à toute variante liées à la géolocalisation, en communiquant avec ladite plateforme de base de données (DB) afin de vérifier l'état actuel des numéros de série (ns), et en générant un nouveau numéro de série attribuable au projet (11) à imprimer, dans lequel ledit numéro de série (ns) généré comprend un code d'identification univoque d'une pièce à imprimer et est imprimé en même temps que la pièce à imprimer, devenant ainsi une partie de celle-ci ;
- générer lesdites instructions d'impression (istr_3D) en fonction de ladite confirmation générée pour l'envoi des instructions d'impression (istr_3D_conf) ;
- envoyer lesdites instructions d'impression générées (Istr_3D) à ladite imprimante 3D (3D_printer) ;
dans lequel ladite imprimante 3D (3D_printer) est mise en place pour effectuer les étapes suivantes :
- réaliser à distance une impression 3D autorisée dudit projet (11) stocké dans ladite base de données (DB) en fonction desdites instructions d'impression (Istr_3D) reçues ;
le procédé d'impression 3D conditionné (1) réalisant de cette manière ladite impression 3D dudit projet (11) au moyen de ladite imprimante 3D (3D_printer) en fonction desdits choix de conception (Pi) définis par ledit concepteur (P) dans ladite plateforme de traitement (10), et en fonction desdites instructions d'impression machine (Istr_3D) envoyées par ladite plateforme de partage (20) suite à l'évaluation de la conformité desdits paramètres de demande d'autorisation (Preq_auth) et desdits paramètres de demande d'instructions d'impression (Preq_istr_3D).
